(19) Europäisches Patentamt

European Patent Office

Office européen des brevets

(11) **EP 1 256 906 A2**

(12) **EUROPEAN PATENT APPLICATION**

(43) Date of publication:
**13.11.2002 Bulletin 2002/46**

(51) Int Cl.⁷: **G06T 3/40**

(21) Application number: **02010349.5**

(22) Date of filing: **07.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **09.05.2001 JP 2001138164**
**17.07.2001 JP 2001216243**

(71) Applicant: **Monolith Co., Ltd.**
**Tokyo 106-0045 (JP)**

(72) Inventors:
• **Akiyoshi, Kozo**
**Tokyo 106-0045 (JP)**
• **Akiyoshi, Nobuo**
**Tokyo 106-0045 (JP)**

(74) Representative: **Pfenning, Meinig & Partner GbR**
**Mozartstrasse 17**
**80336 München (DE)**

(54) **Image processing method**

(57)     An image input unit (12) inputs a first image (I1) and a second image (I2). A matching processor (14) performs a pixel-by-pixel matching between the images and transmits a corresponding point file (F) to an imprinting unit (100). The corresponding point file (F) is imprinted into the first image (I1) and an altered first image (I1a) is generated. In decoding, an extracting unit (102) extracts the corresponding point file (F) from the altered first image (I1a) and an intermediate image generator (18) generates intermediate images from the first image (I1), the second image (I2) and the corresponding file (F). A program utilized for decoding is also imprinted into the first image (I1).

Fig. 6

**Description**

The present invention relates to image processing techniques, and it particularly relates to techniques of encoding and decoding two images and also relates to content storing techniques utilized for the encoding and decoding techniques.

MPEG (Motion Picture Expert Group), the de-facto world standard for the compression of motion pictures, has broaden its target area from storage media such as CDs to transmission media such as network or broadcasting. Without compressing and encoding techniques, in the center of which exists the MPEG, digital broadcasting can not be realized. A barrier that has existed between broadcasting and network communication is now disappearing, so service providers inevitably have to become more diverse. Today, in the broadband age, it is difficult to predict in what way the digital culture will achieve its development.

In such a chaotic situation, however, there is one certain direction in which the development of motion picture compressing technique would proceed. That is, to pursue higher rate of compression and higher quality of pictures. It is a well-known fact that in MPEG, block-noise sometimes spoils higher compression. The more the distribution of motion pictures becomes usual, the more consideration for copyrights is needed.

Various respective aspects and features of the invention are defined in the appended claims. Features from the dependent claims may be combined with features of the independent claims as appropriate and not merely as explicitly set out in the claims.

The present invention has been achieved in view of the above current situation, and accordingly aims to provide encoding and decoding techniques which can realize the efficient compression of image data. Another object of the present invention is to provide encoding and decoding techniques which can fulfill two opposite requests -that are, to keep good quality of images and to achieve a higher rate of compression. Still another object is to realize a distribution model in which copyrights are sufficiently taken into consideration in distributing encoded motion pictures or decoding in a user's side. Yet another object is to provide a content storing technique which can be utilized in the above-described image processing.

An embodiment of the present invention relates to an image processing technology. This technology can utilize the image matching technology (hereinafter referred to as the "base technology") which has already proposed in Japanese patent No.2927350, USP 6,018,592 and USP 6,137,910 assigned to the same assignee.

A preferred embodiment of the present invention comprises: acquiring images; and imprinting data utilized for processing which is performed on the images. The data utilized for decoding the images are an example of the "data utilized for processing" when the images are encoded by a certain method. In that case, the present invention can be, therefore, considered as an image encoding technology.

Another example is information which instructs processing content of these images, such as, for example, "Display the images after decompression". Still another example is parameters utilized for the image processing. The parameters are, for example, the parallax data of each point or each pixel on the images, and the pseudo three-dimensional images of those images can be displayed based on the data.

The known technology imprints copyright information on an image as a watermark in a visible or invisible manner. The information is, however, not utilized for the processing which is performed on the image. According to this embodiment of the present invention, desired processing can be performed on the images afterward because the data regarding the image processing are imprinted. The security of the data is enhanced in distributing or reproducing the images because the processing content can be concealed easily, if the data are imprinted in an invisible manner. Even a reproducing device which does not know the existence of the data can reproduce at least a part of the images because only the image frames are distributed, if the data are completely imprinted into the images. Upward compatibility is, therefore, sufficiently provided.

Another embodiment of the present invention comprises:

acquiring a first image and a second image; computing a matching between the acquired first and second images; and

imprinting the information of corresponding points acquired as a result of the matching into at least one of the first and second images. The information may be imprinted into only one of the first and second images or may be imprinted into both of the images separately. The information of the corresponding points between the first image and the second image may be imprinted into the first image and the information of corresponding points between the second image and a third image may be imprinted into the second image and generally the information of corresponding points between an n-th image and an n+1-th image may be imprinted into the n-th image. Besides this, the information of corresponding points between any combination of the images may be imprinted into any image, and it is especially expedient that the information is imprinted into a data structure closed as a motion picture when the images form a motion picture stream.

Another embodiment of the present invention relates to an image processing apparatus. This apparatus comprises an image input unit which acquires images, and an imprinting unit which imprints data utilized for the processing which is performed on the acquired images, decoding for example, into the images. Still another embodiment comprises an image input unit which acquires the first image and the second image, a matching processor which computes a matching between the acquired first and second images, and an imprinting unit which imprints the information of the corresponding points acquired as a result of the matching into at least one of the first and second images, or imprints the motion picture stream which comprises those images.

The matching processor detects points on the second image which correspond to lattice points of a mesh set on the first image and a destination polygon which corresponds to a source polygon that constitutes the mesh on the first image may be defined on the second image based on the result of detection.

These above-described matching methods utilizing the critical points may be an application of the base technology. The base technology, however, does not at all touch on the processing regarding the lattice points or the polygons determined thereby. Introduction of a sort of such the simplified technique as the polygons in the present invention makes possible the significant reduction of the size of a file which describes correspondence relation of points between the first image and the second image (hereinafter referred to as a "corresponding point file").

Namely, in a case where the first and second images have nxm pixels respectively, there are caused $(n \times m)^2$ combinations if their pixel-by-pixel correspondence is described as it is, so that the size of the corresponding point file will become extremely large. However, instead, this correspondence is modified by describing the correspondence relation between the lattice points or, substantially equivalently, the correspondence relation between polygons determined by the lattice points, so that the data amount is reduced significantly. Motion pictures can be reproduced by having only the first image or the second image and the corresponding point file, and this method realizes highly efficient transmission or storing of the motion pictures.

Still another embodiment of the present invention relates to a method utilized in reproducing the images. The method comprises: acquiring the images; and extracting data utilized for the processing which is performed on the images, such as decoding for example, from the images. This method may further comprise: performing the interpolation of the images based on the data; and outputting, for example storing, transmitting or displaying, the motion pictures acquired as the result of the interpolation. This embodiment can be, therefore, considered as an image decoding method.

Yet another embodiment of the present invention relates to an apparatus utilized in reproducing the images. This apparatus comprises an image input unit which acquires the images, and an extracting unit which extracts the data from the images which is utilized for the processing performed on the images. The apparatus may further comprise an intermediate image generator which performs the interpolation of the images based on the extracted data, and an output unit which outputs the motion pictures acquired as the result of the interpolation.

Yet another embodiment of the present invention relates to an image processing method and it particularly relates to an image encoding method. This method may comprise: acquiring a first image and a second image as key frames, which respectively keep predetermined distance to each other; computing the matching between the acquired first and second images; compressing the first and second images in an intraframe format; imprinting the information of the corresponding points acquired as the result of the matching into a predetermined image in the motion picture stream which comprises the compressed first and second images; generating a coded motion picture stream which comprises at least the first and second images and the predetermined image as the key frames after imprinting; and outputting the coded motion picture stream which is generated.

In this case, as another embodiment, the information of the corresponding points acquired as the result of the matching may be imprinted into at least one of the first image and the second image in imprinting the information into the predetermined image in the motion picture stream, and only the compressed first and second images may be comprised in the motion picture stream as the key frames in generating the coded motion picture stream.

"Compressing in an intraframe format" is to compress an image in such a format that enables to perform decompression processing by referring to solely within the image frame. The compression of still pictures, such as JPEG, corresponds to the format.

An image decoding method which corresponds to the this method may comprise: decompressing the first and the second images and so forth in the intraframe format after acquiring those images; extracting the information of the corresponding points from the first image or the second image or the like into which the information is imprinted; generating intermediate images from the information of the corresponding points and the first and second images, which are the key frames, by computing interpolation; and outputting, for example storing or displaying, the generated intermediate images and the first and second images in order.

A preferred embodiment of the image processing method according to the present invention comprises: acquiring the images; imprinting data utilized for performing the processing on the images (hereinafter referred to as "target data") into the images; and distributing an electronic key to a user for extracting the target data. The user is generally the user who acquires the images. The "electronic key" comprises following various elemental technologies and combinations thereof and is utilized in a decoding side.

There may be a case that the key is substantially data or a program.

1) The key which decodes the target data when the data are encoded.
2) The key which extracts the target data by performing the processing reverse to the imprinting process of the data.
3) The key which authenticates the user.
4) The key which decodes the entire images when the images including the target data are encoded.

The information of the corresponding points is illustrated as an example of the target data. These variations and other variations regarding the key are effective throughout this specification.

Yet another embodiment of the present invention relates to an image processing method. This method comprises: acquiring the images; and imprinting a program for reproducing or decoding the images into the images. For "reproducing", for example, the program as so-called a viewer or an image player is imprinted. For "decoding", for example, an image processing program is imprinted, which converts discrete image frames into continuous motion pictures by the interpolation or other processing when the images comprise the discrete image frames. Processing which generates intermediate frames between key frames based on the information of corresponding points between the key frames can be considered as an example of the processing, which is described in the undermentioned "base technology".

Yet another embodiment of the present invention further relates to an image processing method. This method comprises: acquiring first and the second images; computing a matching between the acquired first and second images; imprinting information of corresponding points acquired as the result of the matching into at least one of the first and second images; and imprinting a program into at least one of the first and second images, which is utilized for generating an intermediate images of the first and second images based on the imprinted information of the corresponding points. In "imprinting," the information of the corresponding points may be imprinted into any image included in the motion picture stream which comprises the first and the second images.

Yet another embodiment of the present invention relates to an image processing method. This method is mainly utilized in decoding and comprises: acquiring images; and extracting a program for reproducing or decoding the images, which is imprinted into the acquired images. The method may further comprise: 1) acquiring the electronic key for extracting the program from the images; 2) extracting information of corresponding points imprinted into the images in addition to this program; 3) generating motion pictures based on the images by executing this program; and so forth.

Yet another embodiment of the present invention further relates to an image processing method. This method comprises: acquiring first and second images as the key frames, which respectively keep a predetermined distance to each other; computing a matching between the acquired first and second images; compressing the first and second images in a intraframe format; imprinting a program into at least one of the compressed first and second images, which generates intermediate images of the first and the second images utilizing the result of the matching; generating a coded motion picture stream which includes at least the compressed first and second images as the key frames; and outputting the coded motion picture stream which is generated. The program may be imprinted into the predetermined image in the motion picture stream which comprises the compressed first and second images.

Yet another embodiment of the present invention relates to a content storing method. This method comprises: acquiring a digitalized content; and imprinting a program for reproducing or decoding the content into the content.

The content may have particularity in relationship to the program that the entire content can be reproduced by utilizing the program, though the content is stored in a generalized format in which the content can be partly reproduced without the program.

The content may also have particularity in relationship to the program that the content can be reproduced with high quality utilizing the program, though the content is stored in a generalized format in which the content can be reproduced with low quality without the program.

The base technology is not indispensable to the present invention. Any arbitrary replacement or substitution of the above-described structural components and processing content, expressions replaced or substituted in part or whole between a method and an apparatus as well as addition thereof, and expressions changed to a computer program, recording medium or the like are all effective as and encompassed by the present invention.

Moreover, this summary of the invention does not necessarily describe all necessarily features so that the invention may also be sub-combination of these described features.

The invention will be now described by way of example with reference to the accompanying drawings, throughout which like parts are referred to by like references, and in which:

Fig. 1(a) is an image obtained as a result of the application of an averaging filter to a human facial image.
Fig. 1(b) is an image obtained as a result of the application of an averaging filter to another human facial image.

Fig. 1(c) is an image of a human face at $p^{(5,0)}$ obtained in a preferred embodiment in the base technology.

Fig. 1(d) is another image of a human face at $p^{(5,0)}$ obtained in a preferred embodiment in the base technology.

Fig. 1(e) is an image of a human face at $p^{(5,1)}$ obtained in a preferred embodiment in the base technology.

Fig. 1(f) is another image of a human face at $p^{(5,1)}$ obtained in a preferred embodiment in the base technology.

Fig. 1(g) is an image of a human face at $p^{(5,2)}$ obtained in a preferred embodiment in the base technology.

Fig. 1(h) is another image of a human face at $p^{(5,2)}$ obtained in a preferred embodiment in the base technology.

Fig. 1(i) is an image of a human face at $p^{(5,3)}$ obtained in a preferred embodiment in the base technology.

Fig. 1(j) is another image of a human face at $p^{(5,3)}$ obtained in a preferred embodiment in the base technology.

Fig. 2(R) shows an original quadrilateral.

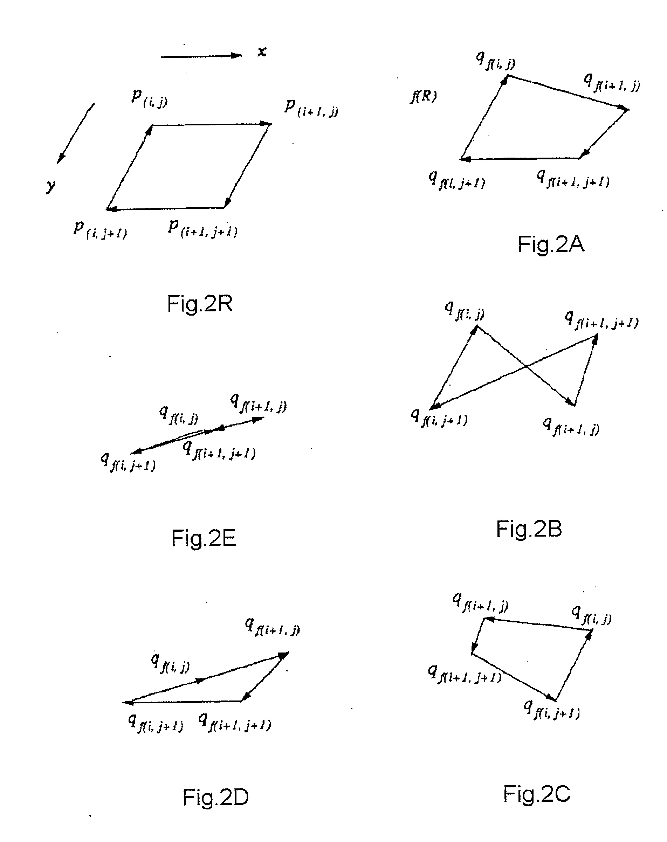

Fig. 2(A) shows an inherited quadrilateral.

Fig. 2(B) shows an inherited quadrilateral.

Fig. 2(C) shows an inherited quadrilateral.

Fig. 2(D) shows an inherited quadrilateral.

Fig. 2(E) shows an inherited quadrilateral.

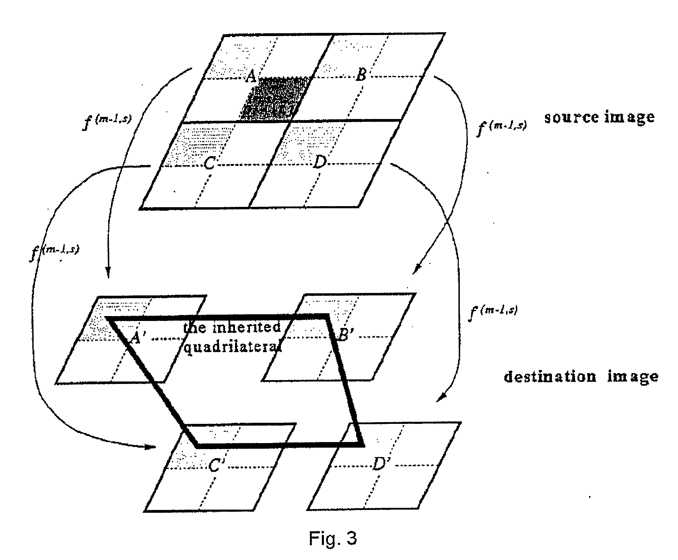

Fig. 3 is a diagram showing the relationship between a source image and a destination image and that between the m-th level and the (m-1)th level, using a quadrilateral.

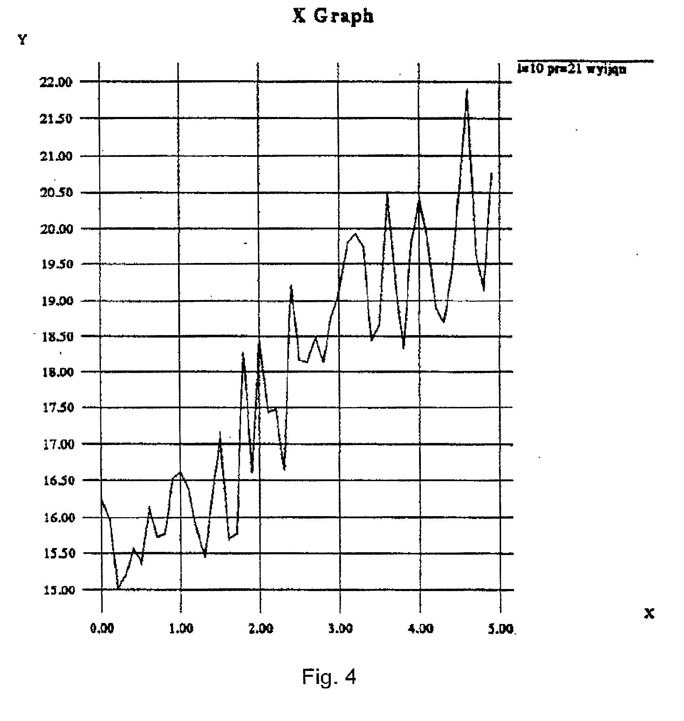

Fig. 4 shows the relationship between a parameter $\eta$ (represented by x-axis) and energy $C_f$ (represented by y-axis).

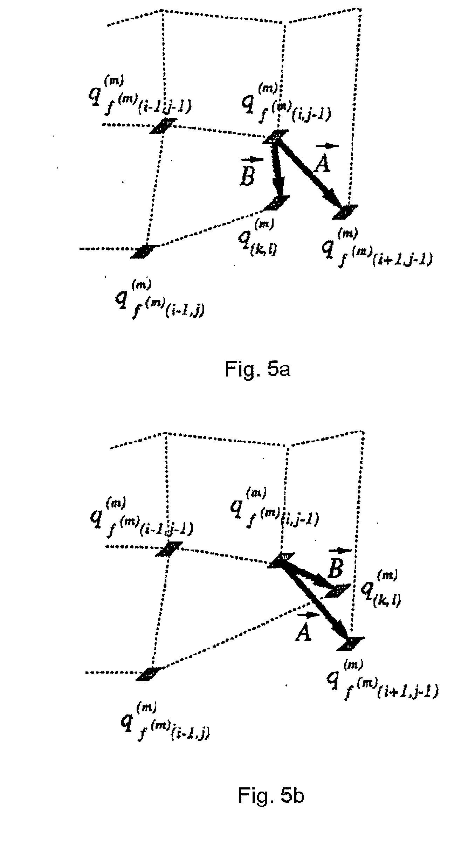

Fig. 5(a) is a diagram illustrating determination of whether or not the mapping for a certain point satisfies the bijectivity condition through the outer product computation.

Fig. 5(b) is a diagram illustrating determination of whether or not the mapping for a certain point satisfies the bijectivity condition through the outer product computation.

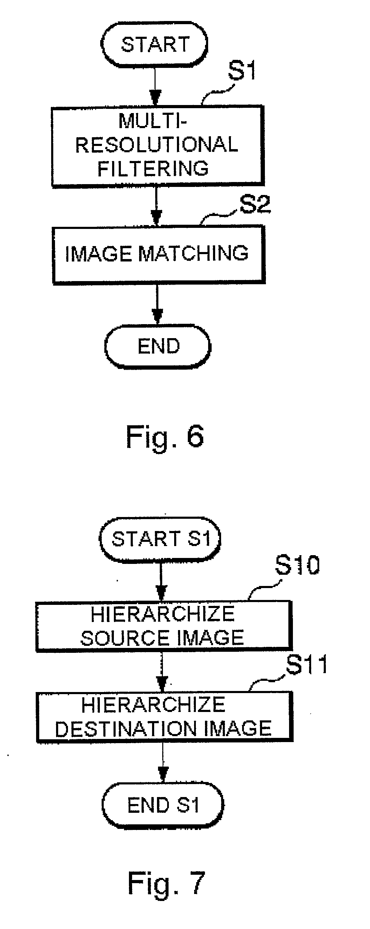

Fig. 6 is a flowchart of the entire procedure of a preferred embodiment in the base technology.

Fig. 7 is a flowchart showing the details of the process at S1 in Fig. 6.

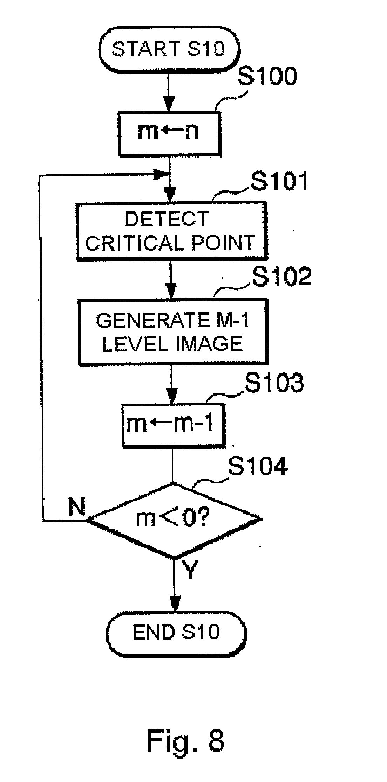

Fig. 8 is a flowchart showing the details of the process at S10 in Fig. 7.

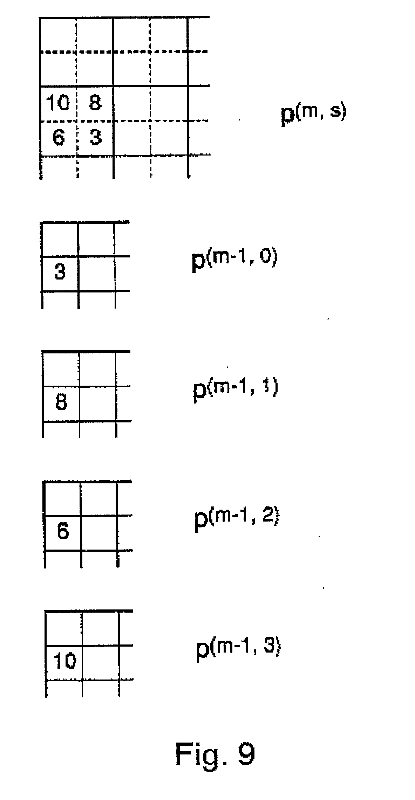

Fig. 9 is a diagram showing correspondence between partial images of the m-th and (m-1)th levels of resolution.

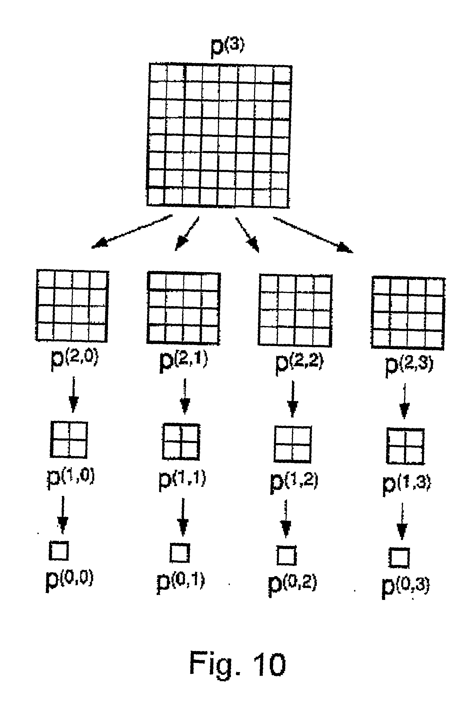

Fig. 10 is a diagram showing source images generated in the embodiment in the base technology.

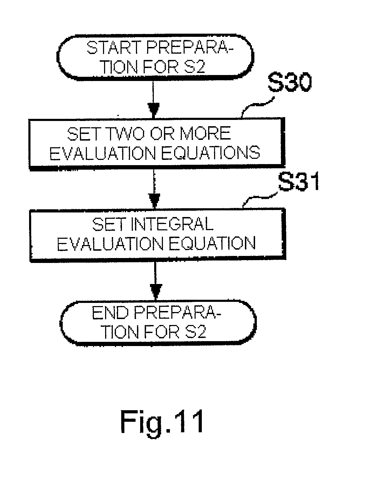

Fig. 11 is a flowchart of a preparation procedure for S2 in Fig. 6.

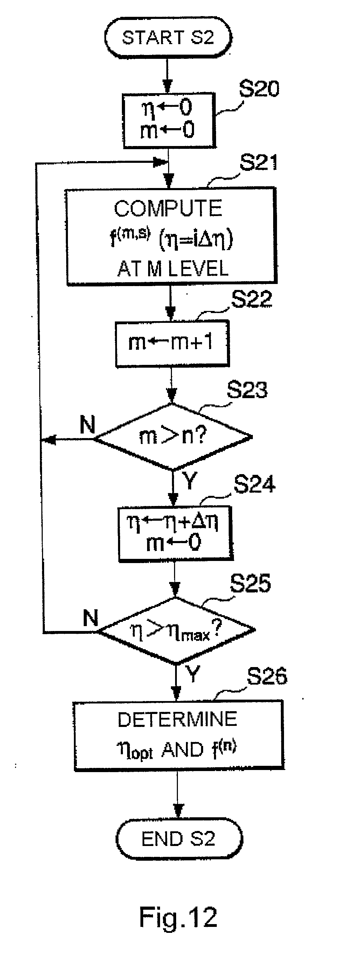

Fig. 12 is a flowchart showing the details of the process at S2 in Fig. 6.

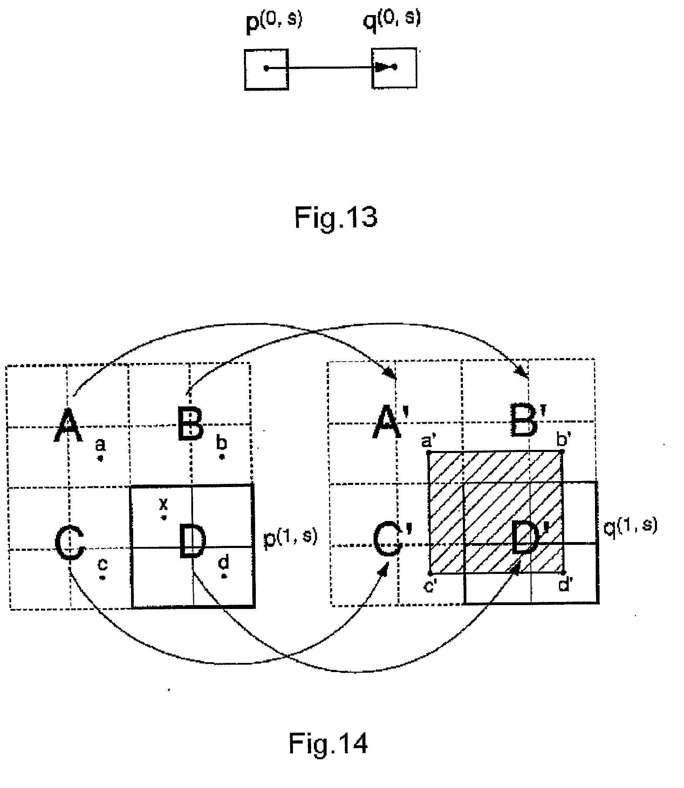

Fig. 13 is a diagram showing the way a submapping is determined at the 0-th level.

Fig. 14 is a diagram showing the way a submapping is determined at the first level.

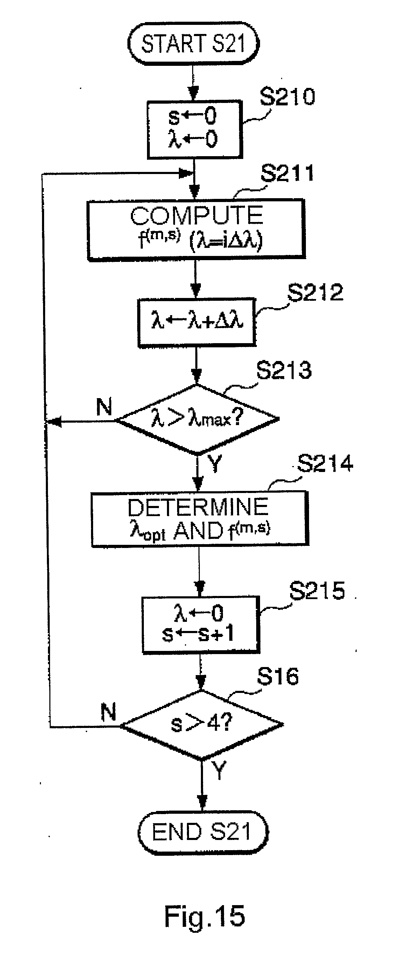

Fig. 15 is a flowchart showing the details of the process at S21 in Fig. 6.

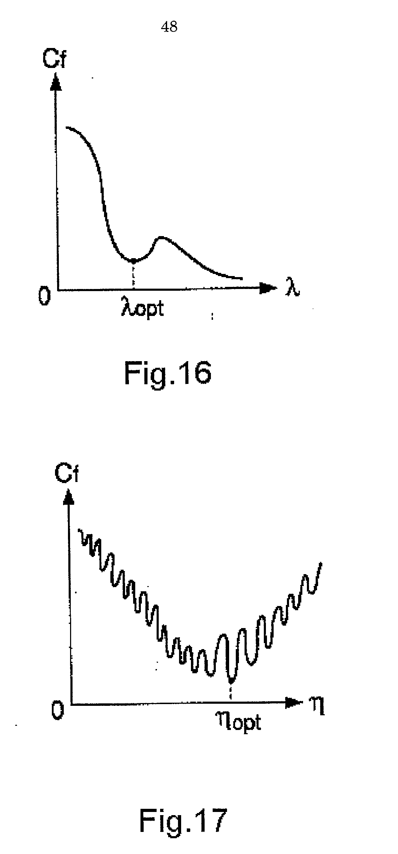

Fig. 16 is a graph showing the behavior of energy $C^{(m,s)}_f$ corresponding to $f^{(m,s)}$ ($\lambda=i\Delta\lambda$) which has been obtained for a certain $f^{(m,s)}$ while changing $\lambda$.

Fig. 17 is a diagram showing the behavior of energy $C^{(n)}_f$ corresponding to $f^{(n)}$ ($\eta=i\Delta\eta$)($i=0,1,...$) which has been obtained while changing $\eta$.

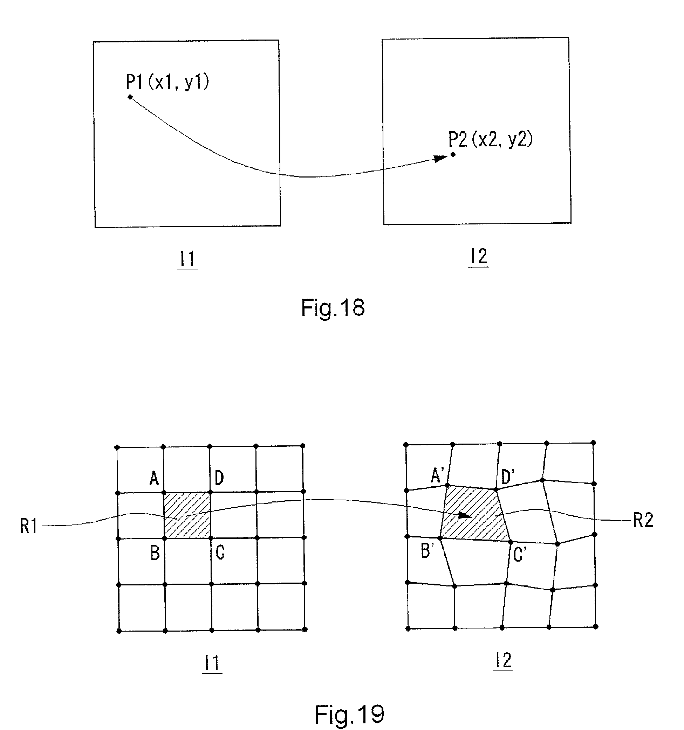

Fig. 18 shows how certain pixels correspond between the first image and the second image.

Fig. 19 shows a correspondence relation between the source polygon taken on the first image and the destination polygon taken on the second image.

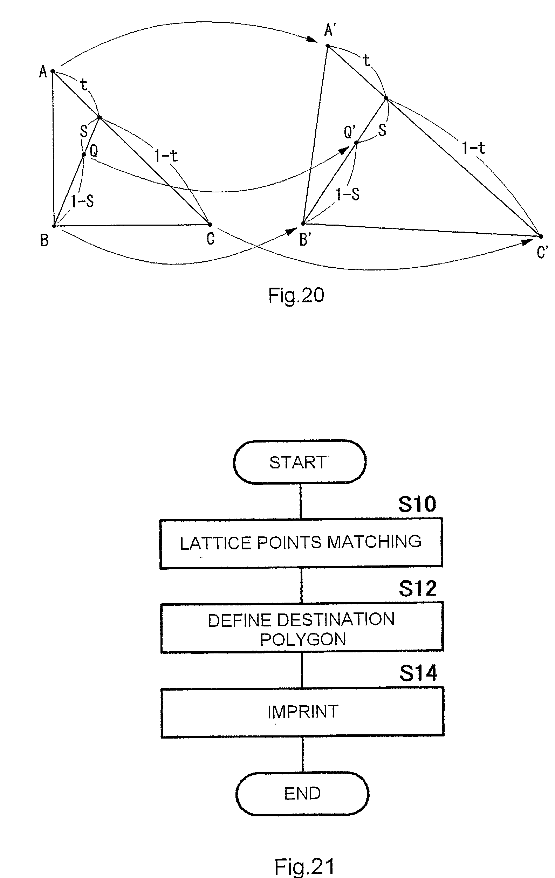

Fig. 20 shows a procedure by which to obtain the points in the destination polygon corresponding to the points in the source polygon.

Fig. 21 is a flowchart showing a procedure for generating and imprinting the corresponding point file, according to a present embodiment.

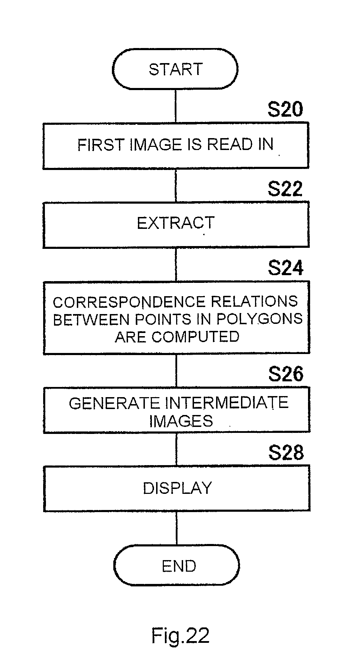

Fig. 22 is a flowchart showing a procedure for generating an intermediate image by extracting the corresponding point file, according to a present embodiment.

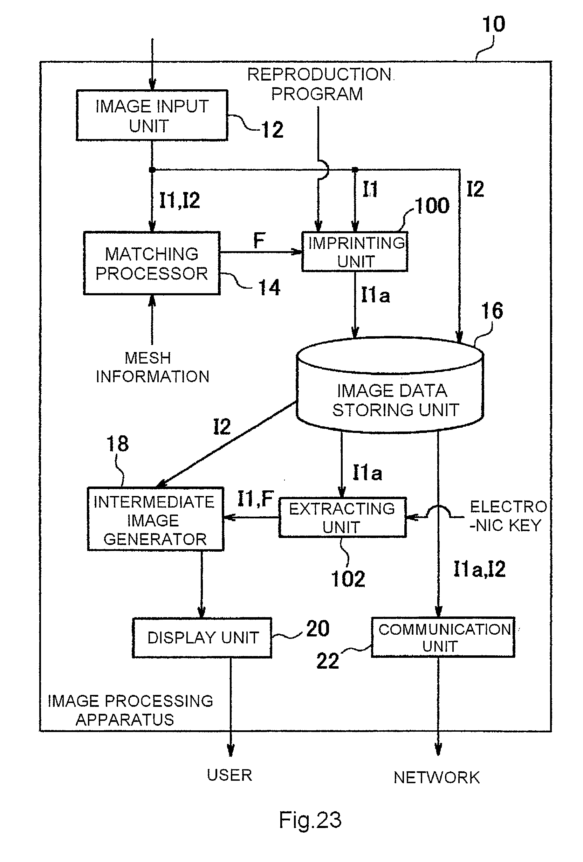

Fig. 23 shows a structure of an image processing apparatus according to a present embodiment.

The invention will now be described based on the preferred embodiments, which do not intend to limit the scope of the present invention, but exemplify the invention. All of the features and the combinations thereof described in the embodiment are not necessarily essential to the invention.

At first, the multiresolutional critical point filter technology and the image matching processing using the technology, both of which will be utilized in the preferred embodiments, will be described in detail as "Base Technology". Namely, the following sections of [1] and [2] belong to the base technology, where [1] describes elemental techniques and [2] describes a processing procedure. These techniques are patented under Japanese Patent No. 2927350 and owned by the same inventor of the present invention, and they realize an optimal achievement when combined with the present invention. According to the present invention, there is provided a mesh on the image, so that lattice points thereof represent a plurality of pixels. Thus, application efficiency for such the pixel-by-pixel matching technique as in the base technology is naturally high. However, it is to be noted that the image matching techniques which can be adopted in the present embodiments are not limited to this. In Figs. 18 to 23, image processing techniques utilizing the base technology will be described in a specific manner.

**Base Technology**

[1] Detailed description of elemental techniques

[1.1] Introduction

Using a set of new multiresolutional filters called critical point filters, image matching is accurately computed. There is no need for any prior knowledge concerning objects in question. The matching of the images is computed at each resolution while proceeding through the resolution hierarchy. The resolution hierarchy proceeds from a coarse level to a fine level. Parameters necessary for the computation are set completely automatically by dynamical computation analogous to human visual systems. Thus, There is no need to manually specify the correspondence of points between the images.

The base technology can be applied to, for instance, completely automated morphing, object recognition, stereo photogrammetry, volume rendering, smooth generation of motion images from a small number of frames. When applied to the morphing, given images can be automatically transformed. When applied to the volume rendering, intermediate images between cross sections can be accurately reconstructed, even when the distance between them is rather long and the cross sections vary widely in shape.

[1.2] The hierarchy of the critical point filters

The multiresolutional filters according to the base technology can preserve the intensity and locations of each critical point included in the images while reducing the resolution. Now, let the width of the image be N and the height of the image be M. For simplicity, assume that $N=M=2n$ where n is a positive integer. An interval [0, N] C R is denoted by I. A pixel of the image at position (i, j) is denoted by $p^{(i,j)}$ where i,j . I.

Here, a multiresolutional hierarchy is introduced. Hierarchized image groups are produced by a multiresolutional filter. The multiresolutional filter carries out a two dimensional search on an original image and detects critical points therefrom. The multiresolutinal filter then extracts the critical points from the original image to construct another image having a lower resolution. Here, the size of each of the respective images of the m-th level is denoted as $2^m X2^m$ (0 m n). A critical point filter constructs the following four new hierarchical images recursively, in the direction descending from n.

$$p^{(m,0)}_{(i,j)} = \min(\min(p^{(m+1,0)}_{(2i,2j)}, p^{(m+1,0)}_{(2i,2j+1)}),\min(p^{(m+1,0)}_{(2i+1,2j)},p^{(m+1,0)}_{(2i+1,2j+1)}))$$

$$p^{(m,1)}_{(i,j)} = \max(\min(p^{(m+1,1)}_{(2i,2j)},p^{(m+1,1)}_{(2i,2j+1)}),\min(p^{(m+1,1)}_{(2i+1,2j)},p^{(m+1,1)}_{(2i+1,2j+1)}))$$

$$p^{(m,2)}_{(i,j)} = \min(\max(p^{(m+1,2)}_{(2i,2j)},p^{(m+1,2)}_{(2i,2j+1)}),\max(p^{(m+1,2)}_{(2i+1,2j)},p^{(m+1,2)}_{(2i+1,2j+1)}))$$

$$p^{(m,3)}_{(i,j)} = \max(\max(p^{(m+1,3)}_{(2i,2j)},p^{(m+1,3)}_{(2i,2j+1)}),\max(p^{(m+1,3)}_{(2i+1,2j)},p^{(m+1,3)}_{(2i+1,2j+1)})) \quad (1)$$

where let

$$p^{(n,0)}_{(i,j)} = p^{(n,1)}_{(i,j)} = p^{(n,2)}_{(i,j)} = p^{(n,3)}_{(i,j)} = p_{(i,j)} \quad (2)$$

The above four images are referred to as subimages hereinafter. When $\min_{x\,t\,x+1}$ and $\max_{x\,t\,x+1}$ are abbreviated to and $\alpha$ and $\beta$, respectively, the subimages can be expressed as follows.

$$P^{(m,0)} = \alpha(x)\alpha(y)p^{(m+1,0)}$$

$$P^{(m,1)} = \alpha(x)\beta(y)p^{(m+1,1)}$$

$$P^{(m,2)} = \beta(x)\alpha(y)p^{(m+1,2)}$$

$$P^{(m,2)} = \beta(x)\beta(y)p^{(m+1,3)}$$

Namely, they can be considered analogous to the tensor products of $\alpha$ and $\beta$. The subimages correspond to the respective critical points. As is apparent from the above equations, the critical point filter detects a critical point of the original image for every block consisting of 2 X 2 pixels. In this detection, a point having a maximum pixel value and a point having a minimum pixel value are searched with respect to two directions, namely, vertical and horizontal directions, in each block. Although pixel intensity is used as a pixel value in this base technology, various other values relating to the image may be used. A pixel having the maximum pixel values for the two directions, one having minimum pixel values for the two directions, and one having a minimum pixel value for one direction and a maximum pixel value for the other direction are detected as a local maximum point, a local minimum point, and a saddle point, respectively.

By using the critical point filter, an image (1 pixel here) of a critical point detected inside each of the respective blocks serves to represent its block image (4 pixels here). Thus, resolution of the image is reduced. From a singularity theoretical point of view, $\alpha(x)\alpha(y)$ preserves the local minimum point(minima point),$\beta(x)\beta(y)$ preserves the local maximum point(maxima point), $\alpha(x)\beta(y)$ and $\beta(x)\,\alpha(y)$ preserve the saddle point.

At the beginning, a critical point filtering process is applied separately to a source image and a destination image which are to be matching-computed. Thus, a series of image groups, namely, source hierarchical images and destination hierarchical images are generated. Four source hierarchical images and four destination hierarchical images are generated corresponding to the types of the critical points.

Thereafter, the source hierarchical images and the destination hierarchical images are matched in a series of the resolution levels. First, the minima points are matched using $p^{(m,0)}$. Next, the saddle points are matched using $p^{(m,1)}$ based on the previous matching result for the minima points. Other saddle points are matched using $p^{(m,2)}$. Finally, the maxima points are matched using $p^{(m,3)}$.

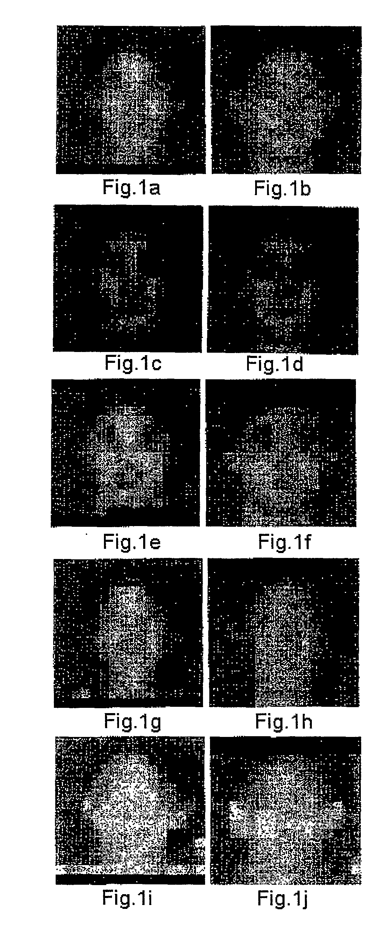

Figs. 1(c) and 1(d) show the subimages $p^{(5,0)}$ of the images in Figs. 1(a) and 1(b), respectively. Similarly, Figs. 1(e) and 1(f) show the subimages $p^{(5,1)}$. Figs. 1(g) and 1(h) show the subimages $p^{(5,2)}$. Figs. 1(i) and 1(j) show the subimages $p^{(5,3)}$. Characteristic parts in the images can be easily matched using subimages. The eyes can be matched by $p^{(5,0)}$ since the eyes are the minima points of pixel intensity in a face. The mouths can be matched by $p^{(5,1)}$ since the mouths have low intensity in the horizontal direction. Vertical lines on the both sides of the necks become clear by $p^{(5,2)}$. The ears and bright parts of cheeks become clear by $p^{(5,3)}$ since these are the maxima points of pixel intensity.

As described above, the characteristics of an image can be extracted by the critical point filter. Thus, by comparing, for example, the characteristics of an image shot by a camera and with the characteristics of several objects recorded in advance, an object shot by the camera can be identified.

[1.3] Computation of mapping between images

The pixel of the source image at the location (i,j) is denoted by $p^{(n)}_{(i,j)}$ and that of the destination image at (k,l) is denoted by $q^{(n)}_{(k,l)}$ where i, j, k, l ∈ I. The energy of the mapping between the images (described later) is then defined. This energy is determined by the difference in the intensity of the pixel of the source image and its corresponding pixel of the destination image and the smoothness of the mapping. First, the mapping $f^{(m,0)}:p^{(m,0)} \cdot q^{(m,0)}$ between $p^{(m,0)}$ and $q^{(m,0)}$ with the minimum energy is computed. Based on $f^{(m,0)}$, the mapping $f^{(m,1)}$ between $p^{(m,1)}$ and $q^{(m,1)}$ with the minimum energy is computed. This process continues until $f^{(m,3)}$ between $p^{(m,3)}$ and $q^{(m,3)}$ is computed. Each $f^{(m,i)}$ (i = 0,1,2,...) is referred to as a submapping. The order of i will be rearranged as shown in the following (3) in computing $f^{(m,i)}$ for the reasons to be described later.

$$f^{(m,i)} : p^{(m,\sigma(i))} \rightarrow q^{(m,\sigma(i))} \tag{3}$$

where σ(i)∈{0,1,2,3}.

[1. 3. 1] Bilectivity

When the matching between a source image and a destination image is expressed by means of a mapping, that mapping shall satisfy the Bijectivity Conditions (BC) between the two images (note that a one-to-one surjective mapping is called a bijection). This is because the respective images should be connected satisfying both surjection and injection, and there is no conceptual supremacy existing between these images. It is to be to be noted that the mappings to be constructed here are the digital version of the bijection. In the base technology, a pixel is specified by a grid point.

The mapping of the source subimage (a subimage of a source image) to the destination subimage (a subimage of a destination image) is represented by $f^{(m,s)}$: $I/2^{n-m} \times I/2^{n-m} \cdot I/2^{n-m} \times I/2^{n-m}$ ($s = 0,1,...$), where $f^{(m,s)} = (k,l)$ means that $p_{(k,l)}^{(m,s)}$ of the source image is mapped to $q^{(m,s)}$ of the destination image. For simplicity, when f(i,j)=(k,l) holds, a pixel $q_{(k,l)}$ is denoted by $q_{f(i,j)}^{(i,j)}$.

When the data sets are discrete as image pixels (grid points) treated in the base technology, the definition of bijectivity is important. Here, the bijection will be defined in the following manner, where i,i',j,j',k and l are all integers. First, each square region (4)

$$p_{(i,j)}^{(m,s)} p_{(i+1,j)}^{(m,s)} p_{(i+1,j+1)}^{(m,s)} p_{(i,j+1)}^{(m,s)} \tag{4}$$

on the source image plane denoted by R is considered, where i = 0, ..., $2^m$-1, and j = 0, ..., $2^m$-1. The edges of R are directed as follows.

$$\overrightarrow{p_{(i,j)}^{(m,s)} p_{(i+1,j)}^{(m,s)}}, \overrightarrow{p_{(i+1,j)}^{(m,s)} p_{(i+1,j+1)}^{(m,s)}}, \overrightarrow{p_{(i+1,j+1)}^{(m,s)} p_{(i,j+1)}^{(m,s)}} \text{ and } \overrightarrow{p_{(i,j+1)}^{(m,s)} p_{(i,j)}^{(m,s)}} \tag{5}$$

This square will be mapped by f to a quadrilateral on the destination image plane. The quadrilateral (6)

$$q_{(i,j)}^{(m,s)} \ q_{(i+1,j)}^{(m,s)} q_{(i+1,j+1)}^{(m,s)} q_{(i,j+1)}^{(m,s)} \tag{6}$$

denoted by $f^{(m,s)}$ (R) should satisfy the following bijectivity conditions(BC).

$$\left(\text{So, } f^{(m,s)} (R) = f^{(m,s)}(p_{(i,j)}^{(m,s)} p_{(i+1,j+1)}^{(m,s)} p_{(i+1,j+1)}^{(m,s)} p_{(i,j+1)}^{(m,s)}) = q_{(i,j)}^{(m,s)} q_{(i+1,j)}^{(m,s)} q_{(i+1,j+1)}^{(m,s)} q_{(i,j+1)}^{(m,s)} \right)$$

   1. The edges of the quadrilateral $f^{(m,s)}$(R) should not intersect one another.
   2. The orientation of the edges of $f^{(m,s)}$(R) should be the same as that of R (clockwise in the case of Fig. 2).
   3. As a relaxed condition, retraction mapping is allowed.

The bijectivity conditions stated above shall be simply referred to as BC hereinafter.
Without a certain type of a relaxed condition, there would be no mappings which completely satisfy the BC other than a trivial identity mapping. Here, the length of a single edge of $f^{(m,s)}$ (R) may be zero. Namely, $f^{(m,s)}$ (R) may be a triangle. However, it is not allowed to be a point or a line segment having area zero. Specifically speaking, if Fig. 2(R) is the original quadrilateral, Figs. 2(A) and 2(D) satisfy BC while Figs 2(B), 2(C) and 2(E) do not satisfy BC.
In actual implementation, the following condition may be further imposed to easily guarantee that the mapping is surjective. Namely, each pixel on the boundary of the source image is mapped to the pixel that occupies the same locations at the destination image. In other words, f(i,j)=(i,j) (on the four lines of i=0, i=$2^m$-1, j=0, j=$2^m$-1). This condition will be hereinafter referred to as an additional condition.

[1. 3. 2] Energy of mapping

[1. 3. 2. 1] Cost related to the pixel intensity

The energy of the mapping f is defined. An objective here is to search a mapping whose energy becomes minimum. The energy is determined mainly by the difference in the intensity of between the pixel of the source image and its corresponding pixel of the destination image. Namely, the energy $C_{(i,j)}^{(m,s)}$ of the mapping $f^{(m,s)}$ at(i,j) is determined by the following equation (7).

$$C_{(i,j)}^{(m,s)} = \left| V(p_{(i,j)}^{(m,s)}) - V(q_{f(i,j)}^{(m,s)}) \right|^2 \tag{7}$$

where $V(p^{(m,s)}_{(i,j)}$ and $V(q^{(m,s)}_{f(i,j)}$ are the intensity values of the pixels $p^{(m,s)}_{(i,j)}$ and $q^{(m,s)}_{f(i,j)}$, respectively. The total energy $C^{(m,s)}$ of f is a matching evaluation equation, and can be defined as the sum of $C^{(m,s)}_{(i,j)}$ as shown in the following equation (8).

$$C^{(m,s)}_f = \sum_{i=0}^{i=2^m-1}\sum_{j=0}^{j=2^m-1} C^{(m,s)}_{(i,j)} \qquad --- \quad (8)$$

[1. 3. 2. 2] Cost related to the locations of the pixel for smooth mapping

In order to obtain smooth mappings, another energy $D_f$ for the mapping is introduced. The energy $D_f$ is determined by the locations of $p^{(m,s)}_{(i,j)}$ and $q^{(m,s)}_{f(i,j)}$ (i=0,1,...,2$^m$-1, j=0,1,...,2$^m$-1), regardless of the intensity of the pixels. The energy $D^{(m,s)}_{(i,j)}$ of the mapping f$^{(m,s)}$ at a point (i,j) is determined by the following equation (9).

$$D^{(m,s)}_{(i,j)}=\eta E^{(m,s)}_{0(i,j)}+ E^{(m,s)}_{1(i,j)} \qquad (9)$$

where the coefficient parameter η which is equal to or greater than 0 is a real number. And we have

$$E^{(m,s)}_{0(i,j)} =\|(i,j)-f^{(m,s)}(i,j)\|^2 \qquad (10)$$

$$E^{(m,s)}_{1(i,j)} = \sum_{i'=i-1}^{i}\sum_{j'=j-1}^{j} \|(f^{(m,s)}(i,j)-(i,j))-(f^{(m,s)}(i',j')-(i',j'))\|^2/4 \quad --- \quad (11)$$

where $\|(x,y)\|=\sqrt{x^2+y^2}$ --- (12) and f(i',j') is defined to be zero for i'<0 and j'<0. $E_0$ is determined by the distance between (i,j) and f(i,j). $E_0$ prevents a pixel from being mapped to a pixel too far away from it. However, $E_0$ will be replaced later by another energy function. $E_1$ ensures the smoothness of the mapping. $E_1$ represents a distance between the displacement of p(i,j) and the displacement of its neighboring points. Based on the above consideration, another evaluation equation for evaluating the matching, or the energy $D_f$ is determined by the following equation (13).

$$D^{(m,s)}_f = \sum_{i=0}^{i=2^m-1}\sum_{j=0}^{j=2^m-1} D^{(m,s)}_{(i,j)} \qquad --- \quad (13)$$

[1. 3. 2. 3] Total energy of the mapping

The total energy of the mapping, that is, a combined evaluation equation which relates to the combination of a plurality of evaluations, is defined as $\lambda C^{(m,s)}_{(i,j)}+D^{(m,s)}_f$, where $\lambda \geqq 0$ is a real number. The goal is to detect a state in which the combined evaluation equation has an extreme value, namely, to find a mapping which gives the minimum energy expressed by the following (14).

$$\min_f\{\lambda C^{(m,s)}_f + D^{(m,s)}_f\} \qquad --- \quad (14)$$

Care must be exercised in that the mapping becomes an identity mapping if λ=0 and η=0 (i.e., f$^{(m,s)}$(i,j)=(i,j) for all i=0,1,...,2$^m$-1 and j=0,1,...,2$^m$-1). As will be described later, the mapping can be gradually modified or transformed from an identity mapping since the case of λ=0 and η=0 is evaluated at the outset in the base technology. If the combined evaluation equation is defined as $C^{(m,s)}_f +\lambda D^{(m,s)}_f$ where the original position of λ is changed as such, the equation with λ=0 and η=0 will be $C^{(m,s)}_f$ only. As a result thereof, pixels would be randomly corresponded to each other only because their pixel intensities are close, thus making the mapping totally meaningless. Transforming the mapping based on such a meaningless mapping makes no sense. Thus, the coefficient parameter is so determined that the identity mapping is initially selected for the evaluation as the best mapping.

Similar to this base technology, the difference in the pixel intensity and smoothness is considered in the optical flow technique. However, the optical flow technique cannot be used for image transformation since the optical flow technique takes into account only the local movement of an object. Global correspondence can be detected by utilizing the critical point filter according to the base technology.

[1. 3. 3] Determining the mapping with multiresolution

A mapping $f_{min}$ which gives the minimum energy and satisfies the BC is searched by using the multiresolution hierarchy. The mapping between the source subimage and the destination subimage at each level of the resolution is computed. Starting from the top of the resolution hierarchy (i.e., the coarsest level), the mapping is determined at each resolution level, while mappings at other level is being considered. The number of candidate mappings at each level is restricted by using the mappings at an upper (i.e., coarser) level of the hierarchy. More specifically speaking, in the course of determining a mapping at a certain level, the mapping obtained at the coarser level by one is imposed as a sort of constraint conditions.

Now, when the following equation (15) holds,

$$(i', j') = (\left\lfloor \frac{i}{2} \right\rfloor, \left\lfloor \frac{j}{2} \right\rfloor) \qquad --- \quad (15)$$

$p^{(m-1,s)}_{(i',j')}$ and $q^{(m-1,s)}_{(i',j')}$ are respectively called the parents of $p^{(m,s)}_{(i,j)}$ and $q^{(m,s)}_{(i,j)}$ where $\lfloor x \rfloor$ denotes the largest integer not exceeding x. Conversely, $p^{(m,s)}_{(i,j)}$ and $q^{(m,s)}_{(i,j)}$ are the child of $p^{(m-1,s)}_{(i',j')}$ and the child of $q^{(m-1,s)}_{(i',j')}$, respectively. A function parent (i,j) is defined by the following (16).

$$parent(i, j) = (\left\lfloor \frac{i}{2} \right\rfloor, \left\lfloor \frac{j}{2} \right\rfloor) \qquad --- \quad (16)$$

A mapping between $p^{(m,s)}_{(i,j)}$ and $q^{(m,s)}_{(k,l)}$ is determined by computing the energy and finding the minimum thereof. The value of $f^{(m,s)}(i,j)=(k,l)$ is determined as follows using f(m-1,s) (m=1,2,...,n). First of all, imposed is a condition that $q^{(m,s)}_{(k,l)}$ should lie inside a quadrilateral defined by the following (17) and (18). Then, the applicable mappings are narrowed down by selecting ones that are thought to be reasonable or natural among them satisfying the BC.

$$q^{(m,s)}_{g^{(m,s)}(i-1,j-1)} q^{(m,s)}_{g^{(m,s)}(i-1,j+1)} q^{(m,s)}_{g^{(m,s)}(i+1,j+1)} q^{(m,s)}_{g^{(m,s)}(i+1,j-1)} \qquad (17)$$

where

$$g^{(m,s)}(i,j) = f^{(m-1,s)}(parent(i, j)) + f^{(m-1,s)}(parent(i, j) + (1,1)) \qquad (18)$$

The quadrilateral defined above is hereinafter referred to as the inherited quadrilateral of $p^{(m,s)}_{(i,j)}$. The pixel minimizing the energy is sought and obtained inside the inherited quadrilateral.

Fig. 3 illustrates the above-described procedures. The pixels A, B, C and D of the source image are mapped to A', B', C' and D' of the destination image, respectively, at the (m-1)th level in the hierarchy. The pixel $p^{(m,s)}_{(i,j)}$ should be mapped to the pixel

$$q^{(m,s)}_{f^{(m)}(i,j)}$$

which exists inside the inherited quadrilateral A'B'C'D'. Thereby, bridging from the mapping at the (m-1)th level to the mapping at the m-th level is achieved.

The energy $E_0$ defined above is now replaced by the following (19) and (20)

$$E_{0(i,j)} = \| f^{(m,0)} (i,j) - g^{(m)} (i,j) \|^2 \tag{19}$$

$$E_{0(i,j)} = \| f^{(m,s)} (i,j) - f^{(m,s-1)} (i,j) \|^2, (1 \leq i) \tag{20}$$

for computing the submapping $f^{(m,0)}$ and the submapping $f^{(m,s)}$ at the m-th level, respectively.

In this manner, a mapping which keeps low the energy of all the submappings is obtained. Using the equation (20) makes the submappings corresponding to the different critical points associated to each other within the same level in order that the subimages can have high similarity. The equation (19) represents the distance between $f^{(m,s)}$(i, j) and the location where (i,j) should be mapped when regarded as a part of a pixel at the (m-1)the level.

When there is no pixel satisfying the BC inside the inherited quadrilateral A'B'C'D', the following steps are taken. First, pixels whose distance from the boundary of A'B'C'D' is L (at first, L=1) are examined. If a pixel whose energy is the minimum among them satisfies the BC, then this pixel will be selected as a value of $f^{(m,s)}$(i,j). L is increased until such a pixel is found or L reaches its upper bound $L^{(m)}_{max}$ . $L^{(m)}_{max}$ is fixed for each level m. If no such a pixel is found at all, the third condition of the BC is ignored temporarily and such mappings that caused the area of the transformed quadrilateral to become zero (a point or a line) will be permitted so as to determine $f^{(m,s)}$ (i,j). If such a pixel is still not found, then the first and the second conditions of the BC will be removed.

Multiresolution approximation is essential to determining the global correspondence of the images while preventing the mapping from being affected by small details of the images. Without the multiresolution approximation, it is impossible to detect a correspondence between pixels whose distances are large. In the case where the multiresolution approximation is not available, the size of an image will be limited to the very small one, and only tiny changes in the images can be handled. Moreover, imposing smoothness on the mapping usually makes it difficult to find the correspondence of such pixels. That is because the energy of the mapping from one pixel to another pixel which is far therefrom is high. On the other hand, the multiresolution approximation enables finding the approximate correspondence of such pixels. This is because the distance between the pixels is small at the upper (coarser) level of the hierarchy of the resolution.

[1. 4] Automatic determination of the optimal parameter values

One of the main deficiencies of the existing image matching techniques lies in the difficulty of parameter adjustment. In most cases, the parameter adjustment is performed manually and it is extremely difficult to select the optical value. However, according to the base technology, the optimal parameter values can be obtained completely automatically.

The systems according to this base technology includes two parameters, namely, $\lambda$ and $\eta$, where $\lambda$ and $\eta$ represent the weight of the difference of the pixel intensity and the stiffness of the mapping, respectively. The initial value for these parameters are 0. First, $\lambda$ is gradually increased from $\lambda=0$ while $\eta$ is fixed to 0. As $\lambda$ becomes larger and the value of the combined evaluation equation (equation (14)) is minimized, the value of $C^{(m,s)}_f$ for each submapping generally becomes smaller. This basically means that the two images are matched better. However, if $\lambda$ exceeds the optimal value, the following phenomena (1 - 4) are caused.

1. Pixels which should not be corresponded are erroneously corresponded only because their intensities are close.
2. As a result, correspondence between images becomes inaccurate, and the mapping becomes invalid.
3. As a result, $D^{(m,s)}_f$ in the equation 14 tends to increase abruptly.
4. As a result, since the value of the equation 14 tends to increase abruptly, $f^{(m,s)}$ changes in order to suppress the abrupt increase of $D^{(m,s)}_f$ . As a result, $C^{(m,s)}_f$ increases.

Therefore, a threshold value at which $C^{(m,s)}_f$ turns to an increase from a decrease is detected while a state in which the equation (14) takes the minimum value with $\lambda$ being increased is kept. Such $\lambda$ is determined as the optimal value at $\eta=0$. Then, the behavior of $C^{(m,s)}_f$ is examined while $\eta$ is increased gradually, and $\eta$ will be automatically determined by a method described later. $\lambda$ will be determined corresponding to such the automatically determined $\eta$.

The above-described method resembles the focusing mechanism of human visual systems. In the human visual systems, the images of the respective right eye and left eye are matched while moving one eye. When the objects are clearly recognized, the moving eye is fixed.

[1. 4. 1] Dynamic determination of $\lambda$

$\lambda$ is increased from 0 at a certain interval, and the a subimage is evaluated each time the value of $\lambda$ changes. As shown in the equation (14), the total energy is defined by $\lambda C_f^{(m,s)} + D_f^{(m,s)}$. $D_f^{(m,s)}$ in the equation (9) represents the smoothness and theoretically becomes minimum when it is the identity mapping. $E_0$ and $E_1$ increase as the mapping is further distorted. Since $E_1$ is an integer, 1 is the smallest step of $D_f^{(m,s)}$. Thus, that changing the mapping reduces the total energy is impossible unless a changed amount (reduction amount) of the current $\lambda C_{(i,j)}^{(m,s)}$ is equal to or greater than 1. Since $D_f^{(m,s)}$ increases by more than 1 accompanied by the change of the mapping, the total energy is not reduced unless $\lambda C_{(i,j)}^{(m,s)}$ is reduced by more than 1.

Under this condition, it is shown that $C_{(i,j)}^{(m,s)}$ decreases in normal cases as $\lambda$ increases. The histogram of $C_{(i,j)}^{(m,s)}$ is denoted as h(l), where h(l) is the number of pixels whose energy $C_{(i,j)}^{(m,s)}$ is $l^2$. In order that $\lambda l^2 \geqq 1$, for example, the case of $l^2 = 1/\lambda$ is considered. When $\lambda$ varies from $\lambda_1$ to $\lambda_2$, a number of pixels (denoted A) expressed by the following (21)

$$A = \sum_{l=\left\lceil \frac{1}{\lambda_2} \right\rceil}^{\left\lfloor \frac{1}{\lambda_1} \right\rfloor} h(l) \cong \int_{l=\frac{1}{\lambda_2}}^{\frac{1}{\lambda_1}} h(l)dl = -\int_{\lambda_2}^{\lambda_1} h(l)\frac{1}{\lambda^{3/2}}d\lambda = \int_{\lambda_1}^{\lambda_2}\frac{h(l)}{\lambda^{3/2}}d\lambda \qquad --- (21)$$

changes to a more stable state having the energy (22) which is

$$C_f^{(m,s)} - l^2 = C_f^{(m,s)} - \frac{1}{\lambda}. \tag{22}$$

Here, it is assumed that all the energy of these pixels is approximated to be zero. It means that the value of $C_{(i,j)}^{(m,s)}$ changes by (23).

$$\partial C_f^{(m,s)} = -\frac{A}{\lambda} \tag{23}$$

As a result, the equation (24) holds.

$$\frac{\partial C_f^{(m,s)}}{\partial \lambda} = -\frac{h(l)}{\lambda^{5/2}} \tag{24}$$

Since h(l)>0, $C_f^{(m,s)}$ decreases in normal case. However, when $\lambda$ tends to exceed the optimal value, the above phenomenon that is characterized by the increase in $C_f^{(m,s)}$ occurs. The optimal value of $\lambda$ is determined by detecting this phenomenon.

When

$$h(l) = Hl^k = \frac{H}{\lambda^{kl2}} \tag{25}$$

is assumed where both H(h>0) and k are constants, the equation (26) holds.

$$\frac{\partial C_f^{(m,s)}}{\partial \lambda} = -\frac{H}{\lambda^{5/2+k/2}} \tag{26}$$

Then, if k≠-3, the following (27) holds.

$$C_f^{(m,s)} = C + \frac{H}{(3/2+k/2)\lambda^{3/2+k/2}} \tag{27}$$

The equation (27) is a general equation of $C_f^{(m,s)}$ (where C is a constant).

When detecting the optimal value of $\lambda$, the number of pixels violating the BC may be examined for safety. In the course of determining a mapping for each pixel, the probability of violating the BC is assumed $p_0$ here. In that case, since

$$\frac{\partial A}{\partial \lambda} = \frac{h(l)}{\lambda^{3/2}} \qquad (28)$$

holds, the number of pixels violating the BC increases at a rate of the equation (29).

$$B_0 = \frac{h(l)P_o}{\lambda^{3/2}} \qquad (29)$$

Thus,

$$\frac{B_0 \lambda^{3/2}}{P_0 h(l)} = 1 \qquad 30$$

is a constant. If assumed that $h(l) = Hl^k$, the following (31), for example,

$$B_0 \lambda^{3/2+k/2} = p_0 H \qquad 31$$

becomes a constant. However, when $\lambda$ exceeds the optimal value, the above value of (31) increases abruptly. By detecting this phenomenon, whether or not the value of $B_0 \lambda^{3/2+k/2}/2^m$ exceeds an abnormal value $B_{0thres}$ exceeds is inspected, so that the optimal value of can be determined.

Similarly, whether or not the value of $B_1 \lambda^{3/2+k/2}/2^m$ exceeds an abnormal value $B_{1thres}$, so that the increasing rate $B_1$ of pixels violating the third condition of the BC is checked. The reason why the fact $2^m$ is introduced here will be described at a later stage. This system is not sensitive to the two threshold values $B_{0thres}$ and $B_{1thres}$. The two threshold values $B_{0thres}$ and $B_{1thres}$ can be used to detect the excessive distortion of the mapping which is failed to be detected through the observation of the energy $C_f^{(m,s)}$.

In the experimentation, the computation of $f^{(m,s)}$ is stopped and then the computation of $f^{(m,s+1)}$ is started when $\lambda$ exceeded 0.1. That is because the computation of submappings is affected by the difference of mere 3 out of 255 levels in the pixel intensity when $\lambda > 0.1$, and it is difficult to obtain a correct result when $\lambda > 0.1$.

[1. 4. 2] Histogram h(l)

The examination of $C_f^{(m,s)}$ does not depend on the histogram h(l). The examination of the BC and its third condition may be affected by the h(l). k is usually close to 1 when $(\lambda, C_f^{(m,s)})$ is actually plotted. In the experiment, k=1 is used, that is, $B_0 \lambda^2$ and $B_1 \lambda^2$ are examined. If the true value of k is less than 1, $B_0 \lambda^2$ and $B_1 \lambda^2$ does not become constants and increase gradually by the factor of $\lambda^{(1-k)/2}$. If h(l) is a constant, the factor is, for example, $\lambda^{1/2}$. However, such a difference can be absorbed by setting the threshold $B_{0thres}$ appropriately.

Let us model the source image by a circular object with its center at$(x_0, y_0)$ and its radius r, given by:

$$p(i, j) = \begin{cases} \dfrac{255}{r} c(\sqrt{(i - x_0)^2 + (j - y_0)^2})...(\sqrt{(i - x_0)^2 + (j - y_0)^2} \leq r) \\ 0...(otherwise) \end{cases}$$

$$\text{---}(32)$$

and the destination image given by:

$$q(i, j) = \begin{cases} \dfrac{255}{r} c(\sqrt{(i - x_1)^2 + (j - y_1)^2}) \dots (\sqrt{(i - x_1)^2 + (j - y_1)^2} \leq r) \\ 0 \dots (otherwise) \end{cases}$$

$$--- (33)$$

with its center at $(x_1, y_1)$ and radius r. Let c(x) has the form of $c(x) = x^k$. When the centers $(x_0, y_0)$ and $(x_1, y_1)$ are sufficiently far from each other, the histogram h(l) is then in the form of:

$$h(l) \propto rl^k (k \neq 0) \tag{34}$$

When k=1, the images represent objects with clear boundaries embedded in the backgrounds. These objects become darker toward their centers and brighter toward their boundaries. When k=-1, the images represent objects with vague boundaries. These objects are brightest at their centers, and become darker toward boundaries. Without much loss of generality, it suffices to state that objects in general are between these two types of objects. Thus, k such that $-1 \leq k \leq 1$ can cover the most cases, and it is guaranteed that the equation (27) is generally a decreasing function.

As can be observed from the above equation (34), attention must be directed to the fact that r is influenced by the resolution of the image, namely, r is proportional to $2^m$. That is why the factor $2^m$ was introduced in the above section [1.4.1].

[1. 4. 3] Dynamic determination of $\eta$

The parameter $\eta$ can also be automatically determined in the same manner. Initially, $\eta$ is set to zero, and the final mapping $f^{(n)}$ and the energy $C_f^{(n)}$ at the finest resolution are computed. Then, after $\eta$ is increased by a certain value $\Delta\eta$ and the final mapping $f^{(n)}$ and the energy $C_f^{(n)}$ at the finest resolution are again computed. This process is repeated until the optimal value is obtained. $\eta$ represents the stiffness of the mapping because it is a weight of the following equation (35).

$$E_{0(i,j)}^{(m,s)} = \| f^{(m,s)}(i,j) - f^{(m,s-1)}(i,j) \|^2 \tag{35}$$

When $\eta$ is zero, $D_f^{(n)}$ is determined irrespective of the previous submapping, and the present submapping would be elastically deformed and become too distorted. On the other hand, when $\eta$ is a very large value, $D_f^{(n)}$ is almost completely determined by the immediately previous submapping. The submappings are then very stiff, and the pixels are mapped to almost the same locations. The resulting mapping is therefore the identity mapping. When the value of $\eta$ increases from 0, $C_f^{(n)}$ gradually decreases as will be described later. However, when the value of $\eta$ exceeds the optimal value, the energy starts increasing as shown in Fig. 4. In Fig. 4, the x-axis represents $\eta$, and y-axis represents $C_f$.

The optimum value of $\eta$ which minimizes $C_f^{(n)}$ can be obtained in this manner. However, since various elements affects the computation compared to the case of $\lambda$, $C_f^{(n)}$ changes while slightly fluctuating. This difference is caused because a submapping is re-computed once in the case of $\lambda$ whenever an input changes slightly, whereas all the submappings must be re-computed in the case of $\eta$. Thus, whether the obtained value of $C_f^{(n)}$ is the minimum or not cannot be judged instantly. When candidates for the minimum value are found, the true minimum needs to be searched by setting up further finer interval.

[1. 5] Supersampling

When deciding the correspondence between the pixels, the range of $f^{(m,s)}$ can be expanded to RXR (R being the set of real numbers) in order to increase the degree of freedom. In this case, the intensity of the pixels of the destination image is interpolated, so that $f^{(m,s)}$ having the intensity at non-integer points

$$V(q_{f^{(m,s)}(i,j)}^{(m,s)}) \tag{36}$$

is provided. Namely, supersampling is performed. In its actual implementation, $f^{(m,s)}$ is allowed to take integer and half

integer values, and

$$V(q_{(i,j)+(0.5,0.5)}^{(m,s)}) \tag{37}$$

is given by

$$(V(q_{(i,j)}^{(m,s)})+V(q_{(i,j)+(1,1)}^{(m,s)}))/2 \tag{38}$$

[1. 6] Normalization of the pixel intensity of each image

When the source and destination images contain quite different objects, the raw pixel intensity may not be used to compute the mapping because a large difference in the pixel intensity causes excessively large energy $C_f^{(m,s)}$ relating the intensity, thus making it difficult to perform the correct evaluation.

For example, the matching between a human face and a cat's face is computed as shown in Figs. 20(a) and 20(b). The cat's face is covered with hair and is a mixture of very bright pixels and very dark pixels. In this case, in order to compute the submappings of the two faces, its subimages are normalized. Namely, the darkest pixel intensity is set to 0 while the brightest pixel intensity is set to 255, and other pixel intensity values are obtained using the linear interpolation.

[1. 7] Implementation

In the implementation, utilized is a heuristic method where the computation proceeds linearly as the source image is scanned. First, the value of $f^{(m,s)}$ is determined at the top leftmost pixel (i,j)=(0,0). The value of each $f^{(m,s)}$(i, j) is then determined while i is increased by one at each step. When i reaches the width of the image, j is increased by one and i is reset to zero. Thereafter, $f^{(m,s)}$(i,j) is determined while scanning the source image. Once pixel correspondence is determined for all the points, it means that a single mapping $f^{(m,s)}$ is determined.

When a corresponding point $q_{f(i,j)}$ is determined for $p_{(i,j)}$, a corresponding point $q_{f(i,j+1)}$ of $p_{(i,j+1)}$ is determined next. The position of $q_{f(i,j+1)}$ is constrained by the position of $q_{f(i,j)}$ since the position of $q_{f(i,j+1)}$ satisfies the BC. Thus, in this system, a point whose corresponding point is determined earlier is given higher priority. If the situation continues in which (0,0) is always given the highest priority, the final mapping might be unnecessarily biased. In order to avoid this bias, $f^{(m,s)}$ is determined in the following manner in the base technology.

First, when (s mod 4) is 0, $f^{(m,s)}$ is determined starting from (0,0) while gradually increasing both i and j. When (s mod 4) is 1, it is determined starting from the top rightmost location while decreasing i and increasing j. When (s mod 4) is 2, it is determined starting from the bottom rightmost location while decreasing both i and j. When (s mod 4) is 3, it is determined starting from the bottom leftmost location while increasing i and decreasing j. Since a concept such as the submapping, that is, a parameter s, does not exist in the finest n-th level, $f^{(m,s)}$ is computed continuously in two directions on the assumption that s=0 and s=2.

In the actual implementation, the values of $f^{(m,s)}$(i,j) (m=0,...,n) that satisfy the BC are chosen as much as possible, from the candidates (k,l) by awarding a penalty to the candidates violating the BC. The energy $D_{(k,l)}$ of the candidate that violates the third condition of the BC is multiplied by $\phi$ and that of a candidate that violates the first or second condition of the BC is multiplied by $\psi$. In the actual implementation, $\phi=2$ and $\psi=100000$ are used.

In order to check the above-mentioned BC, the following test is performed as the actual procedure when determining (k,l)=$f^{(m,s)}$(i,j). Namely, for each grid point (k,l) in the inherited quadrilateral of $f^{(m,s)}$(i,j), whether or not the z-component of the outer product of

$$W=\vec{A}\times\vec{B} \tag{39}$$

is equal to or greater than 0 is examined, where

$$\vec{A} = \overrightarrow{q_{f^{(m,s)}(i,j-1)}^{(m,s)} q_{f^{(m,s)}(i+1,j-1)}^{(m,s)}} \tag{40}$$

$$\vec{B} = \overrightarrow{q_{f^{(m,s)}(i,j-1)}^{(m,s)} q_{(k,l)}^{(m,s)}} \tag{41}$$

Here, the vectors are regarded as 3D vectors and the z-axis is defined in the orthogonal right-hand coordinate system. When W is negative, the candidate is awarded a penalty by multiplying $D^{(m,s)}_{(k,l)}$ by $\psi$ so as not to be selected as much as possible.

Figs. 5(a) and 5(b) illustrate the reason why this condition is inspected. Fig. 5(a) shows a candidate without a penalty and Fig. 5(b) shows one with a penalty. When determining the mapping $f^{(m,s)}(i,j+1)$ for the adjacent pixel at (i,j+1), there is no pixel on the source image plane that satisfies the BC if the z-component of W is negative because then $q^{(m,s)}_{(k,l)}$ passes the boundary of the adjacent quadrilateral.

[1. 7. 1] The order of submappings

In the actual implementation, $\sigma(0)=0$, $\sigma(1)=1$, $\sigma(2)=2$, $\sigma(3)=3$, $\sigma(4)=0$ were used when the resolution level was even, while $\sigma(0)=3$, $\sigma(1)=2$, $\sigma(2)=1$, $\sigma(3)=0$, $\sigma(4)=3$ were used when the resolution level was odd. Thus, the submappings are shuffled in an approximately manner. It is to be noted that the submapping is primarily of four types, and s may be any one among 0 to 3. However, a processing with s=4 was actually performed for the reason described later.

[1. 8] Interpolations

After the mapping between the source and destination images is determined, the intensity values of the corresponding pixels are interpolated. In the implementation, trilinear interpolation is used. Suppose that a square $p_{(i,j)}p_{(i+1,j)}p_{(i+1,j+1)}p_{(i,j+1)}$ on the source image plane is mapped to a quadrilateral $q_{f(i,j)}q_{f(i+1,j)}q_{f(i+1,j+1)}q_{f(i,j+1)}$ on the destination image plane. For simplicity, the distance between the image planes is assumed 1. The intermediate image pixels r(x,y,t) ($0 \leq x \leq N-1$, $0 \leq y \leq M-1$) whose distance from the source image plane is t ($0 \leq t \leq 1$) are obtained as follows. First, the location of the pixel r(x,y,t), where x,y,t∈R, is determined by the equation (42).

$$(x,y) = (1-dx)(1-dy)(1-t)(i,j)+(1-dx)(1-dy)tf(i,j)$$

$$+dx(1-dy)(1-t)(i+1,j)+dx(1-dy)tf(i+1,j)$$

$$+(1-dx)dy(1-t)(i,j+1)+(1-dx)dytf(i,j+1)$$

$$+dxdy(1-t)(i+1,j+1)+dxdytf(i+1,j+1) \tag{42}$$

The value of the pixel intensity at r(x,y,t) is then determined by the equation (43).

$$V(r(x,y,t)) = (1-dx)(1-dy)(1-t)V(p_{(i,j)})+(1-dx)(1-dy)tV(q_{f(i,j)})$$

$$+dx(1-dy)(1-t)V(p_{(i+1,j)})+dx(1-dy)tV(q_{f(i+1,j)})$$

$$+(1-dx)dy(1-t)V(p_{(i,j+1)})+(1-dx)dytV(q_{f(i,j+1)})$$

$$+dxdy(1-t)V(p_{(i+1,j+1)})+dxdytV(q_{f(i+1,j+1)}) \tag{43}$$

where dx and dy are parameters varying from 0 to 1.

[1. 9] Mapping to which constraints are imposed

So far, the determination of the mapping to which no constraint is imposed has been described. However, when a correspondence between particular pixels of the source and destination images is provided in a predetermined manner, the mapping can be determined using such correspondence as a constraint.

The basic idea is that the source image is roughly deformed by an approximate mapping which maps the specified pixels of the source image to the specified pixels of the destination images and thereafter a mapping f is accurately computed.

First, the specified pixels of the source image are mapped to the specified pixels of the destination image, then the approximate mapping that maps other pixels of the source image to appropriate locations are determined. In other words, the mapping is such that pixels in the vicinity of the specified pixels are mapped to the locations near the position to which the specified one is mapped. Here, the approximate mapping at the m-th level in the resolution hierarchy is denoted by $F^{(m)}$.

The approximate mapping F is determined in the following manner. First, the mapping for several pixels are specified. When $n_s$ pixels

$$p(i_0,j_0),p(i_1,j_1),...,p(i_{n_{s-1}},j_{n_{s-1}}) \qquad (44)$$

of the source image are specified, the following values in the equation (45) are determined.

$$F^{(n)}(i_0,j_0) = (k_0,l_0),$$

$$F^{(n)}(i_1,j_1) = (k_1,l_1),...,$$

$$F^{(n)}(i_{ns-1},j_{ns-1}) = (k_{ns-1},l_{ns-1}) \qquad (45)$$

For the remaining pixels of the source image, the amount of displacement is the weighted average of the displacement of $p(i_h,j_h)$ (h=0,..., $n_s$ -1). Namely, a pixel $p_{(i,j)}$ is mapped to the following pixel (expressed by the equation (46)) of the destination image.

$$F^{(m)}(i, j) = \frac{(i, j) + \sum_{h=0}^{h=n_s-1}(k_h - i_h, l_h - j_h)weight_h(i, j)}{2^{n-m}} \qquad ---(46)$$

where

$$weight_h(i,j) = \frac{1/\|(i_h\text{-}i,j_h\text{-}j)\|^2}{total\_weight(i,j)} \qquad (47)$$

where

$$total\_weight(i, j) = \sum_{h=0}^{h=n_s-1} 1/\|(i_h - i, j_h - j)\|^2 \qquad ---(48)$$

Second, the energy $D^{(m,s)}$ of the candidate mapping f is changed so that mapping f similar to $F^{(m)}$ has a lower energy. Precisely speaking, $D^{(m,s)}_{(i,j)}$ is expressed by the equation (49).

$$D^{(m,s)}_{(i,j)} = E^{(m,s)}_{0_{(i,j)}} + \eta E^{(m,s)}_{1_{(i,j)}} + \kappa E^{(m,s)}_{2_{(i,j)}} \qquad (49)$$

$$E^{(m,s)}_{2_{(i,j)}} = \begin{cases} 0, & if \left\|F^{(m)}(i, j) - f^{(m,s)}(i, j)\right\|^2 \leq \left\lfloor \dfrac{\rho^2}{2^{2(n-m)}} \right\rfloor \\ \left\|F^{(m)}(i, j) - f^{(m,s)}(i, j)\right\|^2, & otherwise \end{cases} \qquad ---(50)$$

where $\kappa,\rho \geq 0$. Finally, the mapping f is completely determined by the above-described automatic computing process of mappings.

Note that $E^{(m,s)}_{2(i,j)}$ becomes 0 if $f^{(m,s)}(i,j)$ is sufficiently close to $F^{(m)}(i,j)$ i.e., the distance therebetween is equal to or less than

$$\left\lfloor \frac{\rho^2}{2^{2(n-m)}} \right\rfloor \qquad \text{---} \quad (51)$$

It is defined so because it is desirable to determine each value $f^{(m,s)}(i,j)$ automatically to fit in an appropriate place in the destination image as long as each value $f^{(m,s)}(i,j)$ is close to $F^{(m)}(i,j)$. For this reason, there is no need to specify the precise correspondence in detail, and the source image is automatically mapped so that the source image matches the destination image.

[2] Concrete Processing Procedure

The flow of the process utilizing the respective elemental techniques described in [1] will be described.

Fig. 6 is a flowchart of the entire procedure of the base technology. Referring to Fig. 6, a processing using a multiresolutional critical point filter is first performed (S1). A source image and a destination image are then matched (S2). S2 is not indispensable, and other processings such as image recognition may be performed instead, based on the characteristics of the image obtained at S1.

Fig. 7 is a flowchart showing the details of the process at S1 shown in Fig. 6. This process is performed on the assumption that a source image and a destination image are matched at S2. Thus, a source image is first hierarchized using a critical point filter (S10) so as to obtain a series of source hierarchical images. Then, a destination image is hierarchized in the similar manner (S11) so as to obtain a series of destination hierarchical images. The order of S10 and S11 in the flow is arbitrary, and the source image and the destination image can be generated in parallel.

Fig. 8 is a flowchart showing the details of the process at S10 shown in Fig. 7. Suppose that the size of the original source image is $2^n \times 2^n$. Since source hierarchical images are sequentially generated from one with a finer resolution to one with a coarser resolution, the parameter m which indicates the level of resolution to be processed is set to n (S100). Then, critical points are detected from the images $p^{(m,0)}$, $p^{(m,1)}$, $p^{(m,2)}$ and $p^{(m,3)}$ of the m-th level of resolution, using a critical point filter (S101), so that the images $p^{(m-1,0)}$, $p^{(m-1,1)}$, $p^{(m-1,2)}$ and $p^{(m-1,3)}$ of the (m-1)th level are generated (S102). Since m=n here, $p^{(m,0)} = p^{(m,1)} = p^{(m,2)} = p^{(m,3)} = p^{(n)}$ holds and four types of subimages are thus generated from a single source image.

Fig. 9 shows correspondence between partial images of the m-th and those of (m-1)th levels of resolution. Referring to Fig. 9, respective values represent the intensity of respective pixels. $p^{(m,s)}$ symbolizes four images $p(m,0)$ through $p^{(m,3)}$, and when generating $p^{(m-1,0)}$, $p^{(m,s)}$ is regarded as $p^{(m,0)}$. For example, as for the block shown in Fig. 9, comprising four pixels with their pixel intensity values indicated inside, images $p^{(m-1,0)}$, $p^{(m-1,1)}$, $p^{(m-1,2)}$ and $p^{(m-1,3)}$ acquire "3", "8", "6" and "10", respectively, according to the rules described in [1.2]. This block at the m-th level is replaced at the (m-1)th level by respective single pixels acquired thus. Therefore, the size of the subimages at the (m-1)th level is $2^{m-1} \times 2^{m-1}$.

After m is decremented (S103 in Fig. 8), it is ensured that m is not negative (S104). Thereafter, the process returns to S101, so that subimages of the next level of resolution, i.e., a next coarser level, are generated. The above process is repeated until subimages at m=0 (0-th level) are generated to complete the process at S10. The size of the subimages at the 0-th level is 1 X 1.

Fig. 10 shows source hierarchical images generated at S10 in the case of n=3. The initial source image is the only image common to the four series followed. The four types of subimages are generated independently, depending on the type of a critical point. Note that the process in Fig. 8 is common to S11 shown in Fig. 7, and that destination hierarchical images are generated through the similar procedure. Then, the process by S1 shown in Fig. 6 is completed.

In the base technology, in order to proceed to S2 shown in Fig. 6 a matching evaluation is prepared. Fig. 11 shows the preparation procedure. Referring to Fig. 11, a plurality of evaluation equations are set (S30). Such the evaluation equations include the energy $C^{(m,s)}_{(i,j)}$ concerning a pixel value, introduced in [1.3.2.1], and the energy $D^{(m,s)}_f$ concerning the smoothness of the mapping introduced in [1.3.2.2]. Next, by combining these evaluation equations, a combined evaluation equation is set (S31). Such the combined evaluation equation includes $\lambda C^{(m,s)}_{(i,j)} + D^{(m,s)}_f$. Using $\eta$ introduced in [1.3.2.2], we have

$$\Sigma\Sigma(\lambda C^{(m,s)}_{(i,j)} + \eta E^{(m,s)}_{0(i,j)} + E^{(m,s)}_{1(i,j)}) \qquad (52)$$

In the equation (52) the sum is taken for each i and j where i and j run through 0, 1,... , $2^{m-1}$. Now, the preparation for matching evaluation is completed.

Fig. 12 is a flowchart showing the details of the process of S2 shown in Fig. 6. As described in [1], the source hierarchical images and destination hierarchical images are matched between images having the same level of resolution. In order to detect global corresponding correctly, a matching is calculated in sequence from a coarse level to a fine level of resolution. Since the source and destination hierarchical images are generated by use of the critical point filter, the location and intensity of critical points are clearly stored even at a coarse level. Thus, the result of the global matching is far superior to the conventional method.

Referring to Fig. 12, a coefficient parameter $\eta$ and a level parameter m are set to 0 (S20). Then, a matching is computed between respective four subimages at the m-th level of the source hierarchical images and those of the destination hierarchical images at the m-th level, so that four types of submappings $f^{(m,s)}$ (s=0, 1, 2, 3) which satisfy the BC and minimize the energy are obtained (S21). The BC is checked by using the inherited quadrilateral described in [1.3.3]. In that case, the submappings at the m-th level are constrained by those at the (m-1)th level, as indicated by the equations (17) and (18). Thus, the matching computed at a coarser level of resolution is used in subsequent calculation of a matching. This is a vertical reference between different levels. If m=0, there is no coarser level and the process, but this exceptional process will be described using Fig. 13.

On the other hand, a horizontal reference within the same level is also performed. As indicated by the equation (20) in [1.3.3], $f^{(m,3)}$, $f^{(m,2)}$ and $f^{(m,1)}$ are respectively determined so as to be analogous to $f^{(m,2)}$, $f^{(m,1)}$ and $f^{(m,0)}$. This is because a situation in which the submappings are totally different seems unnatural even though the type of critical points differs so long as the critical points are originally included in the same source and destination images. As can been seen from the equation (20), the closer the submappings are to each other, the smaller the energy becomes, so that the matching is then considered more satisfactory.

As for $f^{(m,0)}$, which is to be initially determined, a coarser level by one is referred to since there is no other submapping at the same level to be referred to as shown in the equation (19). In the experiment, however, a procedure is adopted such that after the submappings were obtained up to $f^{(m,3)}$, $f^{(m,0)}$ is renewed once utilizing the thus obtained subamppings as a constraint. This procedure is equivalent to a process in which s=4 is substituted into the equation (20) and $f^{(m,4)}$ is set to $f^{(m,0)}$ anew. The above process is employed to avoid the tendency in which the degree of association between $f^{(m,0)}$ and $f^{(m,3)}$ becomes too low. This scheme actually produced a preferable result. In addition to this scheme, the submappings are shuffled in the experiment as described in [1.7.1], so as to closely maintain the degrees of association among submappings which are originally determined independently for each type of critical point. Furthermore, in order to prevent the tendency of being dependent on the starting point in the process, the location thereof is changed according to the value of s as described in [1.7].

Fig. 13 illustrates how the submapping is determined at the 0-th level. Since at the 0-th level each sub-image is consitituted by a single pixel, the four submappings $f^{(0,s)}$ is automatically chosen as the identity mapping. Fig. 14 shows how the submappings are determined at the first level. At the first level, each of the sub-images is constituted of four pixels, which are indicated by a solid line. When a corresponding point (pixel) of the point (pixel) x in $p^{(1,s)}$ is searched within $q^{(1,s)}$, the following procedure is adopted.

1. An upper left point a, an upper right point b, a lower left point c and a lower right point d with respect to the point x are obtained at the first level of resolution.
2. Pixels to which the points a to d belong at a coarser level by one, i.e., the 0-th level, are searched. In Fig. 14, the points a to d belong to the pixels A to D, respectively. However, the points A to C are virtual pixels which do not exist in reality.
3. The corresponding points A' to D' of the pixels A to D, which have already been defined at the 0-th level, are plotted in $q^{(1,s)}$. The pixels A' to C' are virtual pixels and regarded to be located at the same positions as the pixels A to C.
4. The corresponding point a' to the point a in the pixel A is regarded as being located inside the pixel A', and the point a' is plotted. Then, it is assumed that the position occupied by the point a in the pixel A (in this case, positioned at the upper right) is the same as the position occupied by the point a' in the pixel A'.
5. The corresponding points b' to d' are plotted by using the same method as the above 4 so as to produce an inherited quadrilateral defined by the points a' to d'.
6. The corresponding point x' of the point x is searched such that the energy becomes minimum in the inherited quadrilateral. Candidate corresponding points x' may be limited to the pixels, for instance, whose centers are included in the inherited quadrilateral. In the case shown in Fig. 14, the four pixels all become candidates.

The above described is a procedure for determining the corresponding point of a given point x. The same processing is performed on all other points so as to determine the submappings. As the inherited quadrilateral is expected to become deformed at the upper levels (higher than the second level), the pixels A' to D' will be positioned apart from one another as shown in Fig. 3.

Once the four submappings at the m-th level are determined in this manner, m is incremented (S22 in Fig. 12). Then, when it is confirmed that m does not exceed n (S23), return to S21. Thereafter, every time the process returns to S21, submappings at a finer level of resolution are obtained until the process finally returns to S21 at which time the mapping $f^{(n)}$ at the n-th level is determined. This mapping is denoted as $f^{(n)}(\eta=0)$ because it has been determined relative to $\eta=0$.

Next, to obtain the mapping with respect to other different $\eta$, $\eta$ is shifted by $\Delta\eta$ and m is reset to zero (S24). After confirming that new $\eta$ does not exceed a predetermined search-stop value $\eta_{max}$ (S25), the process returns to S21 and the mapping $f^{(n)}$ ($\eta=\Delta\eta$) relative to the new $\eta$ is obtained. This process is repeated while obtaining $f^{(n)}(\eta=i\Delta\eta)$ ($i=0,1,...$) at S21. When $\eta$ exceeds $\eta_{max}$, the process proceeds to S26 and the optimal $\eta=\eta_{opt}$ is determined using a method described later, so as to let $f^{(n)}(\eta=\eta_{opt})$ be the final mapping $f^{(n)}$.

Fig. 15 is a flowchart showing the details of the process of S21 shown in Fig. 12. According to this flowchart, the submappings at the m-th level are determined for a certain predetermined $\eta$. When determining the mappings, the optimal $\lambda$ is defined independently for each submapping in the base technology.

Referring to Fig. 15, s and $\lambda$ are first reset to zero (S210). Then, obtained is the submapping $f^{(m,s)}$ that minimizes the energy with respect to the then $\lambda$ (and, implicitly, $\eta$) (S211), and the thus obtained is denoted as $f^{(m,s)}$ ($\lambda=0$). In order to obtain the mapping with respect to other different $\lambda$, $\lambda$ is shifted by $\Delta\lambda$. After confirming that new $\lambda$ does not exceed a predetermined search-stop value $\lambda_{max}$ (S213), the process returns to S211 and the mapping $f^{(m,s)}$ ($\lambda=\Delta\lambda$) relative to the new $\lambda$ is obtained. This process is repeated while obtaining $f^{(m,s)}(\lambda=i\Delta\lambda)$ ($i=0,1,...$). When $\lambda$ exceeds $\lambda_{max}$, the process proceeds to S214 and the optimal $\lambda=\lambda_{opt}$ is determined, so as to let $f^{(n)}$ ($\lambda=\lambda_{opt}$) be the final mapping $f^{(m,s)}$ (S214).

Next, in order to obtain other submappings at the same level, $\lambda$ is reset to zero and s is incremented (S215). After confirming that s does not exceed 4 (S216), return to S211. When s=4, $f^{(m,0)}$ is renewed utilizing $f^{(m,3)}$ as described above and a submapping at that level is determined.

Fig. 16 shows the behavior of the energy $C_f^{(m,s)}$ corresponding to $f^{(m,s)}(\lambda=i\Delta\lambda)(i=0,1,...)$ for a certain m and s while varying $\lambda$. Though described in [1.4], as $\lambda$ increases, $C_f^{(m,s)}$ normally decreases but changes to increase after $\lambda$ exceeds the optimal value. In this base technology, $\lambda$ in which $C_f^{(m,s)}$ becomes the minima is defined as $\lambda_{opt}$. As observed in Fig. 16, even if $C_f^{(m,s)}$ turns to decrease again in the range $\lambda > \lambda_{opt}$, the mapping will be spoiled by then and becomes meaningless. For this reason, it suffices to pay attention to the first occurring minima value. $\lambda_{opt}$ is independently determined for each submapping including $f^{(n)}$.

Fig. 17 shows the behavior of the energy $C_f^{(n)}$ corresponding to $f^{(n)}(\eta=i\Delta\eta)$ ($i=0,1,...$) while varying $\eta$. Here too, $C_f^{(n)}$ normally decreases as $\eta$ increases, but $C_f^{(n)}$ changes to increase after $\eta$ exceeds the optimal value. Thus, $\eta$ in which $C_f^{(n)}$ becomes the minima is defined as $\eta_{opt}$. Fig. 17 can be considered as an enlarged graph around zero along the horizontal axis shown in Fig. 4. Once $\eta_{opt}$ is determined, $f^{(n)}$ can be finally determined.

As described above, this base technology provides various merits. First, since there is no need to detect edges, problems in connection with the conventional techniques of the edge detection type are solved. Furthermore, prior knowledge about objects included in an image is not necessitated, thus automatic detection of corresponding points is achieved. Using the critical point filter, it is possible to preserve intensity and locations of critical points even at a coarse level of resolution, thus being extremely advantageous when applied to the object recognition, characteristic extraction, and image matching. As a result, it is possible to construct an image processing system which significantly reduces manual labors.

Some extensions to or modifications of the above-described base technology may be made as follows:

(1) Parameters are automatically determined when the matching is computed between the source and destination hierarchical images in the base technology. This method can be applied not only to the calculation of the matching between the hierarchical images but also to computing the matching between two images in general.

For instance, an energy $E_0$ relative to a difference in the intensity of pixels and an energy $E_1$ relative to a positional displacement of pixels between two images may be used as evaluation equations, and a linear sum of these equations, i.e., $E_{tot}=\alpha E_0+E_1$, may be used as a combined evaluation equation. While paying attention to the neighborhood of the extrema in this combined evaluation equation, $\alpha$ is automatically determined. Namely, mappings which minimize $E_{tot}$ are obtained for various $\alpha$'s. Among such mappings, $\alpha$ at which $E_{tot}$ takes the minimum value is defined as an optimal parameter. The mapping corresponding to this parameter is finally regarded as the optimal mapping between the two images.

Many other methods are available in the course of setting up evaluation equations. For instance, a term which becomes larger as the evaluation result becomes more favorable, such as $1/E_1$ and $1/E_2$, may be employed. A combined evaluation equation is not necessarily a linear sum, but an n-powered sum (n=2, 1/2, -1, -2, etc.), a polynomial or an arbitrary function may be employed when appropriate.

The system may employ a single parameter such as the above $\alpha$, two parameters such as $\eta$ and $\lambda$ in the base

technology or more than two parameters. When there are more than three parameters used, they are determined while changing one at a time.

(2) In the base technology, a parameter is determined in such a manner that a point at which the evaluation equation $C_f^{(m,s)}$ constituting the combined evaluation equation takes the minima is detected after the mapping such that the value of the combined evaluation equation becomes minimum is determined. However, instead of this two-step processing, a parameter may be effectively determined, as the case may be, in a manner such that the minimum value of a combined evaluation equation becomes minimum. In that case, $\alpha E_0 + \beta E_1$, for instance, may be taken up as the combined evaluation equation, where $\alpha + \beta = 1$ is imposed as a constraint so as to equally treat each evaluation equation. The essence of automatic determination of a parameter boils down to determining the parameter such that the energy becomes minimum.

(3) In the base technology, four types of submappings related to four types of critical points are generated at each level of resolution. However, one, two, or three types among the four types may be selectively used. For instance, if there exists only one bright point in an image, generation of hierarchical images based solely on $f^{(m,3)}$ related to a maxima point can be effective to a certain degree. In this case, no other submapping is necessary at the same level, thus the amount of computation relative on s is effectively reduced.

(4) In the base technology, as the level of resolution of an image advances by one through a critical point filter, the number of pixels becomes 1/4. However, it is possible to suppose that one block consists of 3X3 pixels and critical points are searched in this 3X3 block, then the number of pixels will be 1/9 as the level advances by one.

(5) When the source and the destination images are color images, they are first converted to monochrome images, and the mappings are then computed. The source color images are then transformed by using the mappings thus obtained as a result thereof. As one of other methods, the submappings may be computed regarding each RGB component.

### Preferred embodiments concerning image effects

Image processing techniques utilizing the above-described base technology will be described here. These techniques are characterized in that they imprint a corresponding point file and a program utilized by a decoding side (hereinafter referred to as a "reproduction program") into any key frame. The key frames, therefore, seem to be transmitted discretely when the decoding side does not know a fact that the data is imprinted. These key frames may be, for example, compressed in an intraframe format by JPEG and in that case only the key frames can be reproduced by a general viewer which can decode JPEG. An apparatus, on the other hand, which can extract the imprinted corresponding point file and reproduction program, namely an apparatus in the decoding party which is characteristic of this embodiment of the present invention, can generate intermediate frames from the key frames and the corresponding point file and can reproduce not only the key frames but also the intermediate frames. This embodiment of the present invention, therefore, can realize backward compatibility and is highly compatible to exiting technologies and thus promoting wider use of this embodiment is taken into consideration.

A user receives an "electronic key" which can be considered as a "motion picture reproducing kit" by previously paying a registration and content fee in order to extract the corresponding point file and the reproduction program. This key extracts the imprinted corresponding point file and reproduction program and executes the program. The upgrade of the reproduction program can be easily accepted because the reproduction program is transmitted every time the key frames are distributed.

According to this embodiment of the present invention, it is naturally desirable that the size of the corresponding point file and the reproduction program is small because they are imprinted into the key frames. The reproduction program performs undermentioned processing described in Fig. 22 and it is confirmed in an experiment that the program can be executed with the size of at most 100 kilo bytes. The corresponding point file, on the other hand, has a fairly large size because the corresponding point file describes the pixel-by-pixel correspondence in the base technology as it is. Hereunder, therefore, firstly describes the effective compression of the corresponding point file using a mesh, and an image processing apparatus will be described next in the Fig. 23.

Fig. 18 shows a first image I1 and a second image I2 which serve as key frames, where certain pixels $p_1(x_1, y_1)$ and $p_2(x_2, y_2)$ correspond therebetween. The correspondence of these is obtained in the base technology.

Referring to Fig. 19, corresponding positions are shown on the second image I2 of a polygon which constitutes a mesh when the mesh is provided on the first image I1. Now, a polygon R1 aimed at on the first image I1 are determined by four lattice points A, B, C and D. This polygon R1 is called a "source polygon". As have been shown in Fig. 18, these lattice points A, B, C and D have respectively corresponding points A', B', C' and D' on the second image I2, and a polygon R2 formed thus by the corresponding points is called a "destination polygon." The source polygon is generally a rectangle, while the destination polygon is generally a quadrilateral. In any event, according to the present embodiment, the correspondence relation between the first and second images is not described pixel by pixel, instead, the corresponding pixels are described with respect to the lattice points of the source polygon. Such a description is written in a corresponding point file. By directing attentions to the lattice points, the volume of the corresponding point file can be reduced significantly.

The corresponding point file is utilized for generating intermediate images between the first image I1 and the second image I2. As this was described in the base technology section, intermediate images at arbitrary temporal position can be generated by interpolating positions between the corresponding points. Thus, storing the first image I1, the second image I2 and the corresponding point file enables to generate morphing between two images and to generate smooth motion pictures thereto, thus obtaining compression effect on the motion pictures.

Fig. 20 shows a method by which to compute the correspondence relation regarding points other than the lattice points, from the corresponding point file. Since in the corresponding point file there exits information on the lattice points only, data corresponding to interior points of the polygon need to be computed separately. Fig. 20 shows correspondence between a triangle ABC which corresponds to a lower half of the source polygon R1 shown in Fig. 19 and a triangle A'B'C' which corresponds to that of the destination polygon R2 shown in Fig. 19. Now, suppose that an intersection point of a line segment AC and an extended line of BQ to the AC through an interior point Q of the triangle ABC interior-divides the line segment AC in the ratio t: (1-t) and the point Q interior-divides a line segment connecting such the AC interior-dividing point and a point B in the ratio s:(1-s). Similarly, an intersection point of a line segment A'C' and an extended line of B'Q' to the A'C' through a corresponding point Q', which corresponds to the point Q, in a triangle A'B'C' in a destination polygon side interior-divides the line segment A'C', in the ratio t:(1-t) and the point Q' interior-divides a line segment connecting such the A'C' interior-dividing point and a point B' corresponding to B in the ratio s:(1-s). Namely, it is preferable that the source polygon is divided into a triangle, and interior points of the destination polygon are determined in the forms of interior division of the vector concerning the triangle. When expressed in a vector skew field, it becomes

$$BQ = (1\text{-}s)\{(1\text{-}t)BA + tBC\},$$

thus, we have

$$B'Q' = (1\text{-}s)\{(1\text{-}t)B'A' + tB'C'\}$$

Similar processing is naturally performed between a triangle ACD which corresponds to a upper half of the source polygon R1 and a triangle A'C'D' which likewise corresponds to that of the destination polygon R2.

Fig. 21 shows the processing procedure described above. Firstly, the matching results on the lattice points taken on the first image I1 are acquired (S10) as shown in Fig. 19. Then, it is preferable that the pixel-by-pixel matching according to the base technology is performed, so that a portion corresponding to the lattice points is extracted from those results. It is to be noted that the matching results on the lattice points may be specified based on other matching techniques such as the optical flow and block matching, instead of using the base technology.

Thereafter, a destination polygon is defined on the second image I2 (S12), as shown in the right side of Fig. 19. The above procedure completes the generation of the corresponding point file. The corresponding point file and the reproduction program are imprinted into the first image I1 and are outputted therefrom (S14). It is confirmed in an experiment that the high quality intermediate frames with, for example, the resolution of about 256 X 256 pixels can be acquired from the corresponding point file of some to 10 kilo bytes in making the size of the corresponding point file appropriate as this embodiment. The size of the data imprinted, therefore, will be only about 100 kilo bytes together with the reproduction program. There are known watermark techniques which can be utilized as a method for imprinting, such as modulo masking or a density pattern method which manipulates the information of pixel intensity or an ordered dither method which manipulates the information of thresholds. Any technique described above or another arbitrary technique is utilized for imprinting in this embodiment. It is known, for example, that text data of about 70 kilo bytes can be incorporated into an image of 256 X 256 pixels X 8 bits hardly spoiling optical quality of the image by the density pattern method. The imprint of the corresponding point file and the reproduction program can be sufficiently realized without spoiling the optical quality of the images because they can be imprinted not only into the first image I1 but also into the second image I2 and the succeeding key frames, though it depends on actual cases. The processing in an encoding side is now described.

Fig. 22 shows a procedure in the decoding side, which is the side of a user to whom the motion picture is distributed. Namely, there is shown the procedure to generate the intermediate images by inputting the motion picture stream comprising the first image I1 and the second image I2 and so forth. The user is previously distributed an electronic key at a timing which is not shown in the figure prior to this procedure and is preparing for the procedure with such condition that it is possible to extract the corresponding point file and the reproduction program.

The first image I1 is firstly read in (S20), and the corresponding point file and the reproduction program are extracted by the electronic key (S22) in the terminal of the user. Decoding is also performed if they are encoded. The methods for extraction are known respectively for each watermark technique such as modulo masking described above and those methods are utilized in this embodiment.

Thereafter, the correspondence relation between points in the source polygon and those in the destination polygon is computed by the method shown in Fig. 20 (S24). At this time, the correspondence relation on all pixels within the image can be acquired. As described in the base technology, the coordinates and colors of points corresponding to each other are interior-divided in the ratio u:(1-u), so that an intermediate image in a position which interior-divides, with respect to time, in the ratio u:(1-u) between the first image I1 and the second image I2 can be generated (S26).

Fig. 23 shows the structure of an image processing apparatus 10 which performs the above-described procedure. The apparatus 10 comprises an image input unit 12 which acquires the first image I1 and the second image I2 from an external storage device or a photographing camera, a matching processor 14 which performs matching computation on these images using the base technology or other techniques, an imprinting unit 100 which imprints the corresponding point file generated by the matching processor 14 and the reproduction program into the first image I1, an image data storing unit 16 which once stores the first image I1a altered as a result of imprinting (hereinafter referred to as an "altered first image"), the second image I2 and other images, an extracting unit 102 which extracts a corresponding point file F and, by utilizing an electronic key which is separately distributed via a route not shown in the figure, the reproduction program from the altered first image I1a an intermediate image generator 18 which generates the intermediate images between the first image I1 and the second image I2 from the first image I1 acquired by removing the imprinted data from the altered first image I1a and the second image I2, and a display unit 20 which displays the first image I1, the second image I2 and the intermediate images as a series of images similar to original motion pictures adjusting timings. The reproduction program is implemented in this apparatus as the intermediate image generator 18 after extracted by the extracting unit 102. The function of the reproduction program may comprise a part of or the whole of the function of the display unit 20.

A communication unit 22 sends out the altered first image I1a, the second image I2 and other images to a transmission infrastructure such as a network or others according to a request from an external unit. Mesh data which indicate the size of the mesh, the positions of the lattice points and so forth are being inputted in the matching processor 14.

The structure described above is a combination of the structures for encoding and decoding. It can be simply mentioned that the imprinting unit 100 and antecedent units thereof are the structures for encoding and the extracting unit 102 and succeeding units are the structures for decoding. The image data storing unit 16 is common to both structures and may be provided to both apparatuses when encoding and decoding are respectively performed by separate apparatuses.

By implementing the above-described structure, the first image I1 and the second image I2 which are inputted in the image input unit 12 are sent to the matching processor 14. The matching processor 14 performs pixel-by-pixel matching computation between those images. The matching processor 14 generates the corresponding point file F based on the mesh data and the thus generated file F is outputted to the imprinting unit 100.

The first image I1 is also input in the imprinting unit 100. The unit 100 imprints the corresponding point file F and also the reproduction program which is separately provided into the image I1 and outputs the altered first image I1a to the image data storing unit 16. The image data storing unit 16 also stores the second image I2 and succeeding images. Encoding is completed by the processing described above. A corresponding point file F may be, however, imprinted into the second image I2, which is generated between the second image I2 and a third image I3. The processing may also be recursive. The reproduction program may be divided according to necessity and imprinted into the second image I2 and the succeeding images when the size of the program is so large that the quality of the images are influenced by imprinting solely in the first image I1.

Hereunder describes decoding processing. The extracting unit 102 reads out the altered first image I1a from the image data storing unit 16 and extracts the corresponding point file F and the reproduction program by utilizing the electronic key. The extracted corresponding file F is transmitted to the intermediate image generator 18 and the reproduction program is loaded to the memory which is not shown in the figure as the entire intermediate image generator 18 or a part thereof in an executable format.

The intermediate image generator 18 generates the intermediate images between the first image I1 and the second image I2 from the corresponding file F, the first image I1 which is acquired by removing the imprinted data from the altered first image I1a and the second image I2 by performing interpolation. The intermediate images are transmitted to the display unit 20. Timings for outputting the images are adjusted in the display unit 20 and motion pictures or morphing pictures are displayed. It is to be noted that "the first image I1 which is acquired by removing the imprinted data from the altered first image I1a" is not necessarily completely equal to the original first image I1 before imprinting and extracting. The complete correspondence between them will be realized if the imprint and extraction are lossless and if there is loss they will not completely correspond to each other.

The communication unit 22 is the structure which is provided in consideration of such situation that the decoding side is remote and transmits the coded data stream which merely seems to be a series of image frames, such as the altered first image I1a and the second image I2, in appearance. Naturally, not display but storage may be intended in the remote side. The user who has only a viewer for JPEG, for example, and does not have the electronic key which is characteristic of this embodiment can also reproduce the key frames frame by frame when the altered first image I1a and other images are described in a JPEG format. This structure encourages the user who wants to enjoy the complete content as the motion pictures to acquire the electronic key and a business model can be promoted, in which the electronic key are distributed by paying fee.

Hereunder describes alterations. It is not necessary that the interpolation is performed temporally, though encoding and decoding of the motion pictures are considered in the above-described embodiments of the present invention. Spatial interpolation between multi viewpoint images can be naturally utilized in this embodiment.

The first image I1 and other images may be compressed by arbitrary image compression methods including JPEG described above. In that case, the compression may be performed separately from encoding, that is incorporation of the information of the corresponding point into the images, according to the preferred embodiment of the present invention. With regard to decoding, it is sufficient if decompression processing and the interpolation of the images, which is characteristic of this embodiment, are performed respectively.

The present invention can be applied not only to images but also generally to a digital content although the preferred embodiments were for images. It is sufficient if the digital content is acquired and a program for reproducing or decoding the content, that is a reproduction program, is imprinted into the content. This content may have:

1) particularity in relationship to the reproduction program that the entire content can be reproduced by utilizing the program, though the content is stored in a generalized format in which it is possible to partly reproduce the content without the reproduction program; or

2) particularity in relationship to the reproduction program that the content can be reproduced with high quality by utilizing the reproduction program, though the content is stored in a generalized format in which it is possible to reproduce the content with low quality without the reproduction program.

These variations can be derived from a point that at least key frames can be reproduced without the specific reproduction program when reproducing motion pictures according to the preferred embodiment described above. Besides this, it is also available the structure in which the reproduction program is imprinted into motion picture data which normally can be reproduced for one minute so that the entire motion pictures, for example 10 minutes, might be reproduced. Similarly a program which can reproduce an entire music album may be imprinted into the data of the album, which is stored in a manner that only a tune can be reproduced by MP3 or another format.

Similar processing can be considered for image quality or sound quality. Original data, for example, can normally be reproduced only in a thinned out manner, and a program for reproducing the entire data may be imprinted into the data.

According to the above-described embodiments, an electronic key is distributed to a user in a route or at a timing which is separate from that of the distribution of the image. This key may be, however, distributed to the user being imprinted into the images. In that case, there can be considered a method in which the reproduction program is previously distributed to the user, contrary to the preferred embodiments of the present invention. The reproduction program may be structured in such a manner that it is downloaded with no charge of money. The method may comprise: acquiring the images; and imprinting data utilized for image processing into images, which are characteristic of the preferred embodiments when imprinting the electronic key to the images. The above-described "data" corresponds to an electronic key.

Although the present invention has been described in the embodiments, many changes, modifications and replacements may be made by those skilled in the art without departing from the scope of the present invention, which is defined only by the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Further inventive features of the present embodiments are defined in the following references:

4. An image processing method, comprising: acquiring images; and imprinting data utilized for decoding the images thereinto.

5. A method according to reference 4, wherein the data comprises data regarding interpolation of the images.

6. A method according to reference 4, wherein the data comprises information of corresponding points between the images and other images.

7. An image processing method, comprising: acquiring a first image and a second image; computing a matching between the acquired first and second images; and imprinting information of corresponding points acquired as a result of the matching into at least one of the first and second images.

8. An image processing method, comprising: acquiring a first image and a second image; computing a matching between the acquired first and second images; and imprinting information of corresponding points acquired as a result of the matching into an image which is comprised in a motion picture stream which comprises the first and second images.

9. An image processing apparatus, comprising: an image input unit which acquires images; and an imprinting unit which imprints data utilized for processing into the images, which is performed thereon.

10. An apparatus according to reference 9, wherein the imprinting unit imprints data regarding interpolation of the images.

11. An apparatus according to reference 9, wherein the imprinting unit imprints information of corresponding points between the images and other images.

12. An image processing apparatus, comprising: an image input unit which acquires images, and an imprinting unit which imprints data utilized for decoding the images thereinto.

13. An apparatus according to reference 12, wherein the imprinting unit imprints data regarding interpolation of the images.

14. An apparatus according to reference 12, wherein the imprinting unit imprints information of corresponding points between the images and other images.

15. An image processing apparatus, comprising: an input unit which acquires a first image and a second image; a matching processor which computes a matching between the acquired first and second images; and an imprinting unit which imprints information of corresponding points acquired as a result of the matching into at least one of the first and second images.

16. An image processing apparatus, comprising: an input unit which acquires a first image and a second image; a matching processor which computes a matching between the acquired first and second images; and an imprinting unit which imprints information of corresponding points acquired as a result of the matching into an image comprised in a motion picture stream which comprises the first and second images.

17. An apparatus according to one of the references 15 or 16, wherein the matching processor performs pixel-by-pixel matching computation based on correspondence between a critical point detected through a two-dimensional search on the first image and a critical point detected through a two-dimensional search on the second image.

18. An apparatus according to reference 17, wherein the matching processor multiresolutionalizes the first image and the second image by respectively extracting the critical points, then performs pixel-by-pixel matching computation between same multiresolution levels, and acquires a pixel-by-pixel correspondence relation in a finest level of resolution at a final stage while inheriting a result of the pixel-by-pixel matching computation to matching computation in a different multiresolution level.

23. An image processing method, comprising: acquiring images; and extracting data imprinted into the acquired images therefrom, which is utilized for decoding the images.

24. A method according to reference 23, wherein the data comprises data regarding interpolation of the images.

25. A method according to reference 23, wherein the data comprises information of corresponding points between the images and other images.

26. A method according to one of the references 23, 24, or 25, further comprising: performing the interpolation of the images based on the data; and outputting a motion picture acquired as a result of the interpolation.

27. An image processing apparatus, comprising: an image input unit which acquires images; and an extracting unit which extracts data imprinted into the acquired images therefrom, which are utilized for performing processing thereon.

28. An apparatus according to reference 27, wherein the extracting unit extracts data regarding interpolation of the images.

29. An apparatus according to reference 27, wherein the extracting unit extracts information of corresponding points between the images and other images.

30. An apparatus according to one of the references 27, 28, or 29, further comprising: an intermediate image generator which performs the interpolation of the images based on the extracted data; and an output unit which outputs motion pictures acquired as a result of the interpolation.

31. An image processing apparatus, comprising: an image input unit which acquires images; and an extracting unit which extracts data imprinted into the acquired images therefrom, which are utilized for decoding the images.

32. An apparatus according to reference 31, wherein the extracting unit extracts data regarding interpolation of the images.

33. An apparatus according to reference 31, wherein the extracting unit extracts information of corresponding points between the images and other images.

34. An apparatus according to one of the references 31, 32, or 34, further comprising: an intermediate image generator which performs the interpolation of the images based on the extracted data; and an output unit which outputs motion pictures acquired as a result of the interpolation.

35. An image processing method, comprising: acquiring a first image and a second image as key frames, which respectively keep predetermined distance to each other; computing a matching between the acquired first and second images; compressing the first image and the second image in an intraframe format; imprinting information of corresponding points acquired as a result of the matching into at least one of the compressed first and second images; generating a coded motion picture stream which comprises at least the compressed first and second images as the key frames after imprinting; and outputting the coded motion picture stream, which is generated.

36. An image processing method, comprising: acquiring a first image and a second image as key frames, which respectively keep predetermined distance to each other; computing a matching between the acquired first and second images; compressing the first image and the second image in an intraframe format; imprinting information of corresponding points acquired as a result of the matching into a predetermined image in a coded motion picture stream which comprises the compressed first and second images; generating the coded motion picture stream which comprises at least the compressed first and second images and the prescribed image as the key frames after imprinting; and outputting the code motion picture stream, which is generated.

37. A computer program executable by a computer, the program comprising the functions of: acquiring images; and imprinting data utilized for processing into the images, which are performed thereon.

38. A computer program executable by a computer, the program comprising the functions of: acquiring images; and imprinting data utilized for decoding the images thereinto.

39. A computer program executable by a computer, the program comprising the functions of: acquiring images; and extracting data imprinted into the acquired images therefrom, which are utilized for performing processing thereon.

40. A computer program executable by a computer, the program comprising the functions of: acquiring images; and extracting data imprinted into the images therefrom, which are utilized for decoding the images.

41. A computer program executable by a computer according to one of the references 39 or 40, further comprising the function of acquiring an electronic key utilized for extracting the data.

42. A method according to one of the references 1 or 4, further comprising distributing an electronic key for extracting the data to a user.

43. A method according to one of the references 7 or 8, further comprising distributing an electronic key for extracting the information of the corresponding points to a user.

44. A method according to one of the references 19 or 23, further comprising acquiring an electronic key for permitting extraction prior to extracting the data.

45. A method according to one of the references 35 or 36, further comprising distributing an electronic key for extracting the imprinted information of the corresponding points to a user.

46. An image processing method, comprising: acquiring images; and imprinting a program for reproducing the images thereinto.

47. An image processing method, comprising: acquiring images; and imprinting a program for decoding the images thereinto.

48. A method according to one of the references 46 or 47, wherein the images comprise discrete image frames and the program converts the image frames into continuous motion pictures.

49. A method according to one of the references 46 or 47, wherein the program performs interpolation processing on the images.

50. A method according to reference 49 , wherein the interpolation processing is processing which generates an intermediate frame between a plurality of key frames based on information of corresponding points between the key frames.

51. A method according to reference 50, wherein the information of the corresponding points is also imprinted into the images in addition to the program.

52. A method according to one of the references 46 or 47, further comprising distributing an electronic key for extracting the program to a user.

53. An image processing method, comprising: acquiring a first image and a second image; computing a matching between the acquired first and second images; imprinting information of corresponding points acquired as a result of the matching into at least one of the first and second images; and imprinting a program for generating an intermediate image of the first image and the second image based on the imprinted information of the corresponding points into at least one of the first and second images.

54. An image processing method, comprising: acquiring a first image and a second image; computing a matching between the acquired first and second images; imprinting information of corresponding points acquired as a result of the matching into an image comprised in a motion picture stream which comprises the first image and the second image; and imprinting a program for generating an intermediate image of the first image and the second image based on the imprinted information of the corresponding points into at least one of the first and second images.

55. A method according to one of the references 53 or 54, further comprising distributing an electronic key for extracting the program to a user.

56. An image processing apparatus, comprising: an image input unit which acquires images; and an imprinting unit which imprints a program for reproducing the images thereinto.

57. An image processing apparatus, comprising: an image input unit which acquires images; and an imprinting unit which imprints a program for decoding the images thereinto.

58. An image processing method, comprising: acquiring images; and extracting a program imprinted into the acquired images therefrom, which is utilized for reproducing the images.

59. An image processing method, comprising: acquiring images; and extracting a program imprinted into the acquired images therefrom, which is utilized for decoding the images.

60. A method according to one of the references 58 or 59, further comprising acquiring an electronic key for extracting the program from the images.

61. A method according to one of the references 58 or 59, further comprising extracting information of corresponding points, which is imprinted into the images, in addition to the program.

62. A method according to one of the references 58 or 59, further comprising generating motion pictures based on the images by executing the program.

63. A method according to reference 62, wherein the images comprise a plurality of discrete image frames and the program generates an intermediate frame by interpolating those image frames.

64. An image processing apparatus, comprising: an image input unit which acquires images; and an extracting unit which extracts a program imprinted into the acquired images therefrom, which is utilized for reproducing the images.

65. An image processing apparatus, comprising: an image input unit which acquires images; and an extracting unit which extracts a program imprinted into the acquired images therefrom, which is utilized for decoding the images.

66. An apparatus according to one of the references 64 or 65, wherein the image input unit receives an electronic key which permits to extract or decode the program and processing by the extracting unit is realized by the electronic key.

67. An apparatus according to one of the references 64 or 65, further comprising: n intermediate image generator which performs interpolation of the images by utilizing the extracted program; and an output unit which outputs motion pictures acquired as a result of the interpolation.

68. An image processing method, comprising: acquiring a first image and a second image as key frames, which respectively keep predetermined distance to each other; computing a matching between the acquired first and second images; compressing the first image and the second image in an intraframe format; imprinting a program which generates an intermediate image of the first image and the second image utilizing a result of the matching into at least one of the compressed first and second images; generating a coded motion picture stream which comprises at least the compressed first and second images as the key frames after imprinting; and outputting the coded motion picture stream, which is generated.

69. An image processing method, comprising: acquiring a first image and a second image as key frames, which respectively keep predetermined distance to each other; computing a matching between the acquired first and second images; compressing the first image and the second image in an intraframe format; imprinting a program which generates an intermediate image of the first image and the second image utilizing a result of the matching into a predetermined image in a coded motion picture stream which comprises the compressed first and second images; generating the coded motion picture stream which comprises at least the compressed first and second images and the predetermined image as the key frames after imprinting; and outputting the coded motion picture stream, which is generated.

70. A computer program executable by a computer, the program comprising the functions of: acquiring images; and imprinting a program for reproducing the images thereinto.

71. A computer program executable by a computer, the program comprising the functions of: acquiring images; and imprinting a program for decoding the images thereinto.

72. A computer program executable by a computer, the program comprising the functions of: acquiring images; and extracting a program imprinted into the acquired images therefrom, which is utilized for reproducing the images.

73. A computer program executable by a computer, the program comprising the functions of: acquiring images; and extracting a program imprinted into the acquired images threrefrom, which is utilized for decoding the images.

74. A content storing method, comprising: acquiring a content in a digital format; and imprinting a program for reproducing or decoding the content thereinto.

75. A method according to reference number 74, wherein the content is provided with particularity in relationship to the program that the entire content can be reproduced by utilizing the program, though the content is stored in a generalized format in which the content can be partly reproduced without the program.

76. A method according to reference number 74, wherein the content is provided with particularity in relationship to the program that the content can be reproduced with high quality, though the content is stored in a generalized format in which the content can be reproduced with low quality without the program.

**Claims**

1. An image processing method, comprising:

   acquiring images; and
   imprinting data utilized for processing into the images, which is performed thereon.

2. A method according to Claim 1, wherein the data comprise data regarding interpolation of the images.

3. A method according to Claim 1, wherein the data comprise information of corresponding points between the images and other images.

4. A method according to Claim 1, 2 and 3, further comprising distributing an electronic key for extracting the data to a user.

5. An image processing method, comprising:

   acquiring images; and
   extracting data imprinted into the acquired images therefrom, which is utilized for performing processing thereon.

6. A method according to Claim 5, wherein the data comprise data regarding interpolation of the images.

7. A method according to Claim 5, wherein the data comprise information of corresponding points between the images and other images.

8. A method according to Claim 5-7, further comprising:

   performing the interpolation of the images based on the data; and
   outputting motion pictures acquired as a result of the interpolation.

9. A method according to Claim 5-8, further comprising acquiring an electronic key for permitting extraction prior to extracting the data.

Fig.1a　　　　Fig.1b

Fig.1c　　　　Fig.1d

Fig.1e　　　　Fig.1f

Fig.1g　　　　Fig.1h

Fig.1i　　　　Fig.1j

Fig.2R

Fig.2A

Fig.2E

Fig.2B

Fig.2D

Fig.2C

Fig. 3

## X Graph

Fig. 4

Fig. 5a

Fig. 5b

START

S1

MULTI-RESOLUTIONAL FILTERING

S2

IMAGE MATCHING

END

## Fig. 6

START S1

S10

HIERARCHIZE SOURCE IMAGE

S11

HIERARCHIZE DESTINATION IMAGE

END S1

## Fig. 7

START S10

S100

$m \leftarrow n$

S101

DETECT
CRITICAL POINT

S102

GENERATE M-1
LEVEL IMAGE

S103

$m \leftarrow m-1$

S104

N     $m < 0?$

Y

END S10

Fig. 8

Fig. 9

Fig. 10

Fig.11

START S2

$\eta \leftarrow 0$
$m \leftarrow 0$ — S20

COMPUTE
$f^{(m,s)} (\eta = i\Delta\eta)$
AT M LEVEL — S21

$m \leftarrow m+1$ — S22

N ← m > n? — S23

Y

$\eta \leftarrow \eta + \Delta\eta$
$m \leftarrow 0$ — S24

N ← $\eta > \eta_{max}$? — S25

Y

DETERMINE
$\eta_{opt}$ AND $f^{(n)}$ — S26

END S2

Fig.12

$p^{(0, s)}$    $q^{(0, s)}$

# Fig.13

$p^{(1, s)}$    $q^{(1, s)}$

# Fig.14

START S21

$s \leftarrow 0$
$\lambda \leftarrow 0$ S210

COMPUTE
$f^{(m,s)}$ ($\lambda = i\Delta\lambda$) S211

$\lambda \leftarrow \lambda + \Delta\lambda$ S212

N $\leftarrow$ $\lambda > \lambda_{max}$? S213

Y

DETERMINE
$\lambda_{opt}$ AND $f^{(m,s)}$ S214

$\lambda \leftarrow 0$
$s \leftarrow s+1$ S215

N $\leftarrow$ $s > 4$? S16

Y

END S21

Fig.15

48

Fig.16

Fig.17

P1 (x1, y1)

P2 (x2, y2)

I1

I2

Fig.18

A    D

R1

B    C

I1

A'    D'

R2

B'    C'

I2

Fig.19

Fig.20

Fig.21

START

**S20**
FIRST IMAGE IS READ IN

**S22**
EXTRACT

**S24**
CORRESPONDENCE RELATIONS
BETWEEN POINTS IN POLYGONS
ARE COMPUTED

**S26**
GENERATE INTERMEDIATE
IMAGES

**S28**
DISPLAY

END

Fig.22

10

REPRODUCTION
PROGRAM

IMAGE INPUT
UNIT — 12

I1,I2

MATCHING
PROCESSOR

14

MESH
INFORMATION

F

IMPRINTING
UNIT

100

I1a

I1

I2

16

IMAGE DATA
STORING UNIT

18

I2

INTERMEDIATE
IMAGE
GENERATOR

I1,F

I1a

EXTRACTING
UNIT

ELECTRO
-NIC KEY

102

DISPLAY UNIT — 20

COMMUNICATION
UNIT

22

I1a,I2

IMAGE PROCESSING
APPARATUS

USER

NETWORK

Fig.23